(19) Europäisches Patentamt
European Patent Office
Office européen des brevets

(11) **EP 4 715 033 A2**

(12) **EUROPEAN PATENT APPLICATION**

(43) Date of publication:
**25.03.2026 Bulletin 2026/13**

(21) Application number: **26156708.5**

(22) Date of filing: **22.08.2019**

(51) International Patent Classification (IPC):
*C11D 7/30* (2006.01)

(52) Cooperative Patent Classification (CPC):
**C09K 5/045; C08J 9/141; C08J 9/146; C09K 3/30; C11D 7/241; C11D 7/242; C11D 7/30;**
C08J 2203/14; C08J 2203/162; C08J 2325/06;
C08J 2375/04; C09K 2205/12; C09K 2205/126;
C09K 2205/32; C09K 2205/40

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.08.2018 US 201862722149 P**

(62) Document number(s) of the earlier application(s) in accordance with Art. 76 EPC:
**19770215.2 / 3 841 180**

(71) Applicant: **The Chemours Company FC, LLC Wilmington, Delaware 19801 (US)**

(72) Inventors:
• **WYSONG, Ernest Byron**
**Chadds Ford, 19317 (US)**

• **ROBIN, Mark L.**
**Middletown, 19709 (US)**
• **KONTOMARIS, Konstantinos**
**Wilmington, 19808 (US)**

(74) Representative: **Abitz & Partner**
**Postfach 86 01 09**
**81628 München (DE)**

Remarks:
This application was filed on 05.02.2026 as a divisional application to the application mentioned under INID code 62.

(54) **AZEOTROPIC AND AZEOTROPE-LIKE COMPOSITIONS OF Z-1,1,1,4,4,4-HEXAFLUOROBUT-2-ENE**

(57) This application provides azeotropic and near-azeotropic compositions of Z-1,1,1,4,4,4-hexafluoro-but-2-ene (Z-HFO-1336mzz) and a second component selected from the group consisting of n-butane and iso-butane. The inventive compositions are useful as aerosol propellants, refrigerants, cleaning agents, expansion agents for thermoplastic and thermoset foams, solvents, heat transfer media, power cycle working fluids, polymerization media, particulate removal fluids, carrier fluids, buffing abrasive agents, and displacement drying agents.

Figure 1: Px Diagram for the System cis-1336mzz / n- Butane at 29.95 ºC

cis-1336mzz/n-Butane at 29.95 C
KA12=0.0489 KA21=0.0732 KB=-0.1

**EP 4 715 033 A2**

**Description**

CROSS REFERENCE TO RELATED APPLICATIONS

This application claims priority to US Provisional application 62/722,149, filed August 23, 2018.

**BACKGROUND OF THE INVENTION**

*Field of the Disclosure*

The present invention relates to the discovery of azeotropic or azeotrope-like compositions which include Z-1,1,1,4,4,4-Hexafluorobut-2-ene. These compositions are useful as aerosol propellants, refrigerants, cleaning agents, expansion agents ("blowing agents") for the production of thermoplastic and thermoset foams, heat transfer media, gaseous dielectrics, solvents, fire extinguishing and suppression agents, power cycle working fluids, polymerization media, particulate removal fluids, carrier fluids, buffing abrasive agents, and displacement drying agents.

*Description of Related Art*

Many industries have been working for the past few decades to find replacements for the ozone depleting chlorofluorocarbons (CFCs) and hydrochlorofluorocarbons (HCFCs). The CFCs and HCFCs have been employed in a wide range of applications, including their use as aerosol propellants, refrigerants, cleaning agents, expansion agents for thermoplastic and thermoset foams, heat transfer media, gaseous dielectrics, fire extinguishing and suppression agents, power cycle working fluids, polymerization media, particulate removal fluids, carrier fluids, buffing abrasive agents, and displacement drying agents. In the search for replacements for these versatile compounds, many industries have turned to the use of hydrofluorocarbons (HFCs), hydrofluoroolefins (HFOs), and hydrochlorofluoroolefins (HCFOs).

The HFCs do not contribute to the destruction of stratospheric ozone, but are of concern due to their contribution to the "greenhouse effect," i.e., they contribute to global warming. As a result, they have come under scrutiny, and their widespread use may also be limited in the future. Unlike HFCs, many HFOs and HCFOs do not contribute to the greenhouse effect, as they react and decompose in the atmosphere relatively quickly.

**SUMMARY OF THE INVENTION**

Mixtures of certain hydrocarbons or fluorocarbons that include Z-1,1,1,4,4,4-hexafluorobut-2-ene (Z-CF$_3$CH=CHCF$_3$, Z-HFO-1336mzz) are believed to function as potential candidates for replacement of CFCs and HCFCs, but to display low global warming potentials ("GWPs"), and not contribute to the destruction of stratospheric ozone.

In Embodiment 1.0, there is provided a composition comprising Z-HFO-1336mzz and a second component selected from the group consisting of:

a) n-butane;
b) isobutane,

wherein the second component is present in an effective amount to form an azeotrope or azeotrope-like mixture with the Z-HFO-1336mzz.

In Embodiment 2.0, there is provided the composition according to Embodiment 1.0, wherein the second component is n-butane.

In Embodiment 3.0, there is provided the composition according to Embodiment 1.0, wherein the second component is isobutane.

In Embodiment 4.0, there is provided the composition according to Embodiment 1.0, further comprising an additive selected from the group consisting of lubricants, pour point modifiers, anti-foam agents, viscosity improvers, emulsifiers dispersants, oxidation inhibitors, extreme pressure agents, corrosion inhibitors, detergents, catalysts, surfactants, flame retardants, preservatives, colorants, antioxidants, reinforcing agents, fillers, antistatic agents, solubilizing agents, IR attenuating agents, nucleating agents, cell controlling agents, extrusion aids, stabilizing agents, thermally insulating agents, plasticizers, viscosity modifiers, impact modifiers, gas barrier resins, polymer modifiers, rheology modifiers, antibacterial agents, vapor pressure modifiers, UV absorbers, cross-linking agents, permeability modifiers, bitterants, propellants and acid catchers.

In Embodiment 4.1, there is provided the composition according to Embodiment 2.0, further comprising an additive selected from the group consisting of lubricants, pour point modifiers, anti-foam agents, viscosity improvers, emulsifiers dispersants, oxidation inhibitors, extreme pressure agents, corrosion inhibitors, detergents, catalysts, surfactants, flame retardants, preservatives, colorants, antioxidants, reinforcing agents, fillers, antistatic agents, solubilizing agents, IR attenuating agents, nucleating agents, cell controlling agents, extrusion aids, stabilizing agents, thermally insulating agents, plasticizers, viscosity modifiers, impact modifiers, gas barrier resins, polymer modifiers, rheology modifiers, antibacterial agents, vapor pressure modifiers, UV absorbers, cross-linking agents, permeability modifiers, bitterants, propellants and acid catchers.

In Embodiment 4.2, there is provided the composition according to Embodiment 3.0, further comprising an additive selected from the group consisting of lubricants, pour point modifiers, anti-foam agents, viscosity improvers, emulsifiers dispersants, oxidation inhibitors, extreme pressure agents, corrosion inhibitors, detergents, catalysts, surfactants, flame retardants, preservatives, colorants, antioxidants, reinforcing agents, fillers, antistatic agents, solubilizing agents, IR attenuating agents, nucleating agents, cell controlling agents, extrusion aids, stabilizing agents, thermally insulating agents, plasticizers, viscosity modifiers, impact modifiers, gas barrier resins, polymer modifiers, rheology modifiers, antibacterial agents, vapor pressure modifiers, UV absorbers, cross-linking agents, permeability modifiers, bitterants, propellants and acid catchers.

In Embodiment 5.0, there is provided a process of forming a foam comprising:

(a) adding a foamable composition to a blowing agent; and,
(b) reacting said foamable composition under conditions effective to form a foam,

wherein said blowing agent comprises the composition according to Embodiment 1.0.

In Embodiment 5.1, there is provided a process of forming a foam comprising:

(a) adding a foamable composition to a blowing agent; and,
(b) reacting said foamable composition under conditions effective to form a foam,

wherein said blowing agent comprises the composition according to Embodiment 2.0.

In Embodiment 5.2, there is provided a process of forming a foam comprising:

(a) adding a foamable composition to a blowing agent; and,

(b) reacting said foamable composition under conditions effective to form a foam,

wherein said blowing agent comprises the composition according to Embodiment 3.0.

In Embodiment 5.3, there is provided a process of forming a foam according to Embodiments 5.1 or 5.2, wherein the foamable composition comprises a polyol.

In Embodiment 6.0, there is provided a foam formed by the process according to any of Embodiments 5.1 to 5.3

In Embodiment 7.0, there is provided a foam comprising a polymer and the composition according to any of Embodiments 2.0-3.0.

In Embodiment 8.0, there is provided a pre-mix composition comprising a foamable component and a composition according to any of Embodiments 2.0-3.0 as a blowing agent.

In Embodiment 9.0, there is provided a process for producing refrigeration comprising condensing the composition according to any of Embodiments 2.0-3.0, and thereafter evaporating said composition in the vicinity of the body to be cooled.

In Embodiment 10.0, there is provided a heat transfer system comprising the composition according to any of Embodiments 2.0-3.0 as a heat transfer medium.

In Embodiment 11.0, there is provided a method of cleaning a surface comprising bringing the composition according to any of Embodiments 2.0-3.0 into contact with said surface.

In Embodiment 12.0, there is provided an aerosol product comprising a component to be dispensed and the composition according to any of Embodiment 2.0-3.0 as a propellant.

In Embodiment 13.0, there is provided a process for dissolving a solute comprising contacting and mixing said solute with a sufficient quantity of the composition according to any of Embodiments 2.0-3.0.

In Embodiment 14.0, there is provided an azeotropic or near-azeotropic composition according to any of the line entries of any of Tables 1.2, 1.3, 1.4, 1.5, 1.6, 2.2, 2.3, 2.4, 2.5, and 26.

## BRIEF SUMMARY OF THE DRAWINGS

Figure 1 displays the vapor/liquid equilibrium curve for a mixture of Z-HFO-1336mzz (cis-1336mzz) and n-butane at a temperature of 29.95 °C.

Figure 2 displays the vapor/liquid equilibrium curve for a mixture of Z-HFO-1336mzz (cis-1336mzz) and isobutane at 29.94 °C.

Figure 3 displays the solubility of a HFO-1336mzz-Z/n-butane blend in polystyrene compared to neat HFO-1336mzz-Z.

Figure 4 displays the solubility of a HFO-1336mzz-Z/iso-butane blend in polystyrene compared to neat HFO-1336mzz-Z.

## _DETAILED DESCRIPTION OF THE INVENTION_

The present invention relates to azeotropic and near-azeotropic compositions of Z-HFO-1336mzz with each of n-butane and isobutane.

Alternate designations for Z-HFO-1336mzz include Z-1,1,1,4,4,4-hexafluorobut-2-ene (Z-CF$_3$CH=CHF$_3$), cis-1,1,1,4,4,4-hexafluorobut-2-ene (cis-CF$_3$CH=CHF$_3$), Z-HFO-1336mzz and HFO-1336mzzZ. Alternate designations for isobutane include 2-methylpropane.

The azeotrope or azeotrope-like compositions of the present invention can be prepared by any convenient method including mixing or combining the desired amounts. A preferred method is to weigh the desired component amounts and thereafter combine them in an appropriate container.

The inventive compositions can be used in a wide range of applications, including their use as aerosol propellants, refrigerants, solvents, cleaning agents, blowing agents (foam expansion agents) for thermoplastic and thermoset foams, heat transfer media, gaseous dielectrics, fire extinguishing and suppression agents, power cycle working fluids, polymerization media, particulate removal fluids, carrier fluids, buffing abrasive agents, and displacement drying agents.

As used herein, the terms "inventive compositions" and "compositions of the present invention" shall be understood to mean the azeotropic and near-azeotropic compositions of Z-HFO-1336mzz and, a second component selected from the group consisting of n-butane and isobutane.

Uses as a Heat Transfer Medium

The disclosed compositions can act as a working fluid used to carry heat from a heat source to a heat sink. Such heat transfer compositions may also be useful as a refrigerant in a cycle wherein the fluid undergoes a phase change; that is, from a liquid to a gas and back, or vice versa.

Examples of heat transfer systems include but are not limited to air conditioners, freezers, refrigerators, heat pumps, water chillers, flooded evaporator chillers, direct expansion chillers, heat pipes, immersion cooling units, walk-in coolers, heat pumps, mobile refrigerators, mobile air conditioning units and combinations thereof.

In one embodiment, the compositions comprising Z-HFO-1336mzz are useful in mobile heat transfer systems, including refrigeration, air conditioning, or heat pump systems or apparatus. In another embodiment, the compositions are useful in stationary heat transfer systems, including refrigeration, air conditioning, or heat pump systems or apparatus.

As used herein, the term "mobile heat transfer system" shall be understood to mean any refrigeration, air conditioner, or heating apparatus incorporated into a transportation unit for the road, rail, sea or air. In addition, mobile refrigeration or air conditioner units, include those apparatus that are independent of any moving carrier and are known as "intermodal" systems. Such intermodal systems include "containers' (combined sea/land transport) as well as "swap bodies" (combined road/rail transport).

As used herein, the term "stationary heat transfer system" shall be understood to mean a system that is fixed in place during operation. A stationary heat transfer system may be located within or attached to a building, or may be a stand-alone device located out of doors, such as a soft drink vending machine. Such a stationary application may be a stationary air conditioning device or heat pump, including but not limited to a chiller, a high temperature heat pumps, which may be a trans-critical heat pump (one that operates with a condenser temperature above 50°C, 70°C, 80°C, 100°C, 120°C, 140°C, 160°C, 180°C, or 200°C), a residential, commercial or industrial air conditioning system, and may be window-mounted, ductless, ducted, packaged terminal, a chiller, and one that is exterior but connected to a building, such as a rooftop system. In stationary refrigeration applications, the disclosed compositions may be useful in high temperature, medium temperature and/or low temperature refrigeration equipment including commercial, industrial or residential refrigerators and freezers, ice machines, self-contained coolers and freezers, flooded evaporator chillers, direct expansion chillers, walk-in and reach-in coolers and freezers, and combination systems. In some embodiments, the disclosed compositions may be used in supermarket refrigerator systems.

Therefore in accordance with the present invention, the compositions as disclosed herein containing Z-HFO-1336mzz may be useful in methods for producing cooling, producing heating, and transferring heat.

In one embodiment, a method is provided for producing cooling comprising evaporating any of the present compositions comprising Z-HFO-1336mzz in the vicinity of a body to be cooled, and thereafter condensing said composition.

In another embodiment, a method is provided for producing heating comprising condensing any of the present compositions comprising Z-HFO-1336mzz in the vicinity of a body to be heated, and thereafter evaporating said compositions.

In another embodiment, disclosed is a method of using the present compositions comprising Z-HFO-1336mzz as a heat transfer fluid composition. The method comprises transporting said composition from a heat source to a heat sink.

Any one of the compositions disclosed herein may be useful as a replacement for a currently used ("incumbent") refrigerant, including but not limited to R-123 (or HFC-123, 2,2-dichloro-1,1,1-trifluoroethane), R-11 (or CFC-11, trichlorofluoromethane), R-12 (or CFC-12, dichlorodifluoromethane), R-22 (chlorodifluoromethane), R-245fa (or HFC-245fa, 1,1,1,3,3-pentafluoropropane), R-114 (or CFC-114, 1,2-dichloro-1,1,2,2-tetrafluoroethane), R-236fa (or HFC-236fa, 1,1,1,3,3,3-hexafluoropropane), R-236ea (or HFC-236ea, 1,1,1,2,3,3-hexafluoropropane), R-124 (or HCFC-124, 2-chloro-1,1,1,2-tetrafluoroethane), among others.

As used herein, the term "incumbent refrigerant" shall be understood to mean the refrigerant for which the heat transfer system was designed to operate, or the refrigerant that is resident in the heat transfer system.

In another embodiment is provided a method for operating a heat transfer system or for transferring heat that is designed to operate with an incumbent refrigerant by charging an empty system with a composition of the present invention, or by substantially replacing said incumbent refrigerant with a composition of the present invention.

As used herein, the term "substantially replacing" shall be understood to mean allowing the incumbent refrigerant to drain from the system, or pumping the incumbent refrigerant from the system, and then charging the system with a composition of the present invention. The system may be flushed with one or more quantities of the replacement refrigerant before being charged. It shall be understood that some small quantity of the incumbent refrigerant may be present in the system after the system has been charged with the composition of the present invention.

In another embodiment is provided a method for recharging a heat transfer system that contains an incumbent refrigerant and a lubricant, said method comprising substantially removing the incumbent refrigerant from the heat transfer system while retaining a substantial portion of the lubricant in said system and introducing one of the present compositions comprising Z-HFO-1336mzz to the heat transfer system. In some embodiments, the lubricant in the system is partially replaced.

In another embodiment, the compositions of the present invention comprising Z-HFO-1336mzz may be used to top-off a refrigerant charge in a chiller. For instance, if a chiller using HCFC-123 has diminished performance due to leakage of refrigerant, the compositions as disclosed herein may be added to bring performance back up to specification.

In another embodiment, a heat exchange system containing any of the present compositions comprising Z-HFO-1336mzz is provided, wherein said system is selected from the group consisting of air conditioners, freezers, refrigerators, heat pumps, water chillers, flooded evaporator chillers, direct expansion chillers, walk-in coolers, heat pumps, mobile refrigerators, mobile air conditioning units, and systems having combinations thereof. Additionally, the compositions comprising Z-HFO-1336mzz may be useful in secondary loop systems wherein these compositions serve as the primary refrigerant thus providing cooling to a secondary heat transfer fluid that thereby cools a remote location.

Each of a vapor-compression refrigeration system, an air conditioning system, and a heat pump system includes as components an evaporator, a compressor, a condenser, and an expansion device. A vapor-compression cycle re-uses refrigerant in multiple steps producing a cooling effect in one step and a heating effect in a different step. The cycle can be described simply as follows. Liquid refrigerant enters an evaporator through an expansion device, and the liquid refrigerant boils in the evaporator, by withdrawing heat from the environment, at a low temperature to form a vapor and produce cooling. The low-pressure vapor enters a compressor where the vapor is compressed to raise its pressure and temperature. The higher-pressure (compressed) vapor refrigerant then enters the condenser in which the refrigerant condenses and discharges its heat to the environment. The refrigerant returns to the expansion device through which the liquid expands from the higher-pressure level in the condenser to the low-pressure level in the evaporator, thus repeating the cycle.

In one embodiment, there is provided a heat transfer system containing any of the present compositions comprising Z-HFO-1336mzz. In another embodiment is disclosed a refrigeration, air-conditioning or heat pump apparatus containing any of the present compositions comprising Z-HFO-1336mzz. In another embodiment, is disclosed a stationary refrigeration or air-conditioning apparatus containing any of the present compositions comprising Z-HFO-1336mzz. In yet another embodiment is disclosed a mobile refrigeration or air conditioning apparatus containing a composition as disclosed herein.

Lubricants and Additives

In one embodiment, there is provided one of the present compositions comprising Z-HFO-1336mzz and at least one additive. The most common additive is a lubricant. Lubricants and other additives are discussed in Fuels and Lubricants Handbook: Technology, Properties, Performance and Testing, Ch. 15, "Refrigeration Lubricants - Properties and Applications," Michels, H. Harvey and Seinel, Tobias H., MNL37WCD-EB, ASTM International, June 2003, which is incorporated by reference. Lubricants include polyolesters ("POEs"), naphthenic mineral oils ("NMOs") and polyalkylene glycols ("PAGs"), and synthetic lubricants. Other additives are selected from the group that are chemically active in the sense that they can react with metals in the system or with contaminants in the lubricant, including dispersants, oxidation inhibitors, extreme pressure agents, corrosion inhibitors, detergents, acid catchers. The selection of oxidation inhibitor can be dependent on the selection of lubricant. Alkyl phenols (e.g., dibutylhydroxytoluene) may be useful for polyolester lubricants. Nitrogen containing inhibitors (e.g., arylamines and phenols) may be useful for mineral oil lubricants. Acid catchers can be especially important in synthetic lubricant systems, and include alkanolamines, long chain amides and imines, carbonates and epoxides. Still other additives are selected from the group that change physical property characteristics selected from the group consisting of pour point modifiers, anti-foam agents, viscosity improvers, and emulsifiers. Anti-foam agents include the polydimethyl siloxanes, polyalkoxyamines and polyacrylates.

Methods of Forming a Foam

The present invention further relates to a method of forming a foam comprising: (a) adding to a foamable composition a composition of the present invention; and (b) reacting the foamable composition under conditions effective to form a foam.

Closed-cell polyisocyanate-based foams are widely used for insulation purposes, for example, in building construction and in the manufacture of energy efficient electrical appliances. In the construction industry, polyurethane (polyisocyanurate) board stock is used in roofing and siding for its insulation and load-carrying capabilities. Poured and sprayed polyurethane foams are widely used for a variety of applications including insulating roofs, insulating large structures such as storage tanks, insulating appliances such as refrigerators and freezers, insulating refrigerated trucks and railcars, etc.

A second type of insulating foam is thermoplastic foam, primarily polystyrene foam. Polyolefin foams (e.g., polystyrene, polyethylene, and polypropylene) are widely used in insulation and packaging applications. These thermoplastic foams were generally made with CFC-12 (dichlorodifluoromethane) as the blowing agent. More recently HCFCs (HCFC-22, chlorodifluoromethane) or blends of HCFCs (HCFC-22/HCFC-142b) or HFCs (HFC-152a) have been employed as blowing agents for polystyrene. In one embodiment, a thermoplastic foam is prepared by using the azeotropic compositions described herein as blowing agents.

A third important type of insulating foam is phenolic foam. These foams, which have very attractive flammability characteristics, were generally made with CFC-11 (trichlorofluoromethane) and CFC-113 (1,1,2-trichloro-1,2,2-trifluoroethane) blowing agents.

In addition to closed-cell foams, open-cell foams are also of commercial interest, for example in the production of fluid-absorbent articles. U.S. Patent no. 6,703,431 (Dietzen, et. al.) describes open-cell foams based on thermoplastics polymers that are useful for fluid-absorbent hygiene articles such as wound contact materials. U.S. Patent no, 6,071,580 (Bland, et. al.) describes absorbent extruded thermoplastic foams which can be employed in various absorbency applications. Open-cell foams have also found application in evacuated or vacuum panel technologies, for example in the production of evacuated insulation panels as described in U.S. Patent no. 5,977,271 (Malone). Using open-cell foams in evacuated insulation panels, it has been possible to obtain R-values of 10 to 15 per inch of thickness depending upon the evacuation or vacuum level, polymer type, cell size, density, and open cell content of the foam. These open-cell foams have traditionally been produced employing CFCs, HCFCs, or more recently, HFCs as blowing agents.

Multimodal foams are also of commercial interest, and are described, for example, in U.S. Patent nos. 6,787,580 (Chonde, et. al.) and 5,332,761 (Paquet, et. al.). A multimodal foam is a foam having a multimodal cell size distribution, and such foams have particular utility in thermally insulating articles since they often have higher insulating values (R-values) than analogous foams having a generally uniform cell size distribution. These foams have been produced employing CFCs, HCFCs, and, more recently, HFCs as the blowing agent.

All of these various types of foams require blowing (expansion) agents for their manufacture. Insulating foams depend on the use of halocarbon blowing agents, not only to foam the polymer, but primarily for their low vapor thermal conductivity, a very important characteristic for insulation value.

Other embodiments provide foamable compositions, and preferably thermoset or thermoplastic foam compositions, prepared using the compositions of the present disclosure. In such foam embodiments, one or more of the present compositions are included as or part of a blowing agent in a foamable composition, which composition preferably includes one or more additional components capable of reacting and/or foaming under the proper conditions to form a foam or cellular structure. Another aspect relates to foam, and preferably closed cell foam, prepared from a polymer foam formulation containing a blowing agent comprising the compositions of the present disclosure.

Certain embodiments provide methods of preparing foams. In such foam embodiments, a blowing agent comprising a composition of the present disclosure is added to and reacted with a foamable composition, which foamable composition may include one or more additional components capable of reacting and/or foaming under the proper conditions to form a foam or cellular structure. Any of the methods well known in the art, such as those described in "Polyurethanes Chemistry and Technology," Volumes I and II, Saunders and Frisch, 1962, John Wiley and Sons, New York, N.Y., which is incorporated herein by reference, may be used or adapted for use in accordance with the foam embodiments.

In certain embodiments, it is often desirable to employ certain other ingredients in preparing foams. Among these additional ingredients are , catalysts, surfactants, flame retardants, preservatives, colorants, antioxidants, reinforcing agents, fillers, antistatic agents, solubilizing agents, IR attenuating agents, nucleating agents, cell controlling agents, extrusion aids, stabilizing agents, thermally insulating agents, plasticizers, viscosity modifiers, impact modifiers, gas barrier resins, polymer modifiers, rheology modifiers, antibacterial agents, vapor pressure modifiers, UV absorbers, cross-linking agents, permeability modifiers, bitterants, propellants and the like.

Polyurethane foams are generally prepared by combining and reacting an isocyanate with a polyol in the presence of a blowing or expanding agent and auxiliary chemicals added to control and modify both the polyurethane reaction itself and the properties of the final polymer. For processing convenience, these materials can be premixed into two non-reacting parts typically referred to as the "A-side" and the "B-side."

The term "A-side" is intended to mean isocyanate or isocyanate containing mixture. An isocyanate containing mixture may include the isocyanate, the blowing or expanding agent and auxiliary chemicals, like catalysts, surfactants, stabilizers, chain extenders, cross-linkers, water, fire retardants, smoke suppressants, pigments, coloring materials, fillers, etc.

The term "B-side" is intended to mean polyol or polyol containing mixture. A polyol containing mixture usually includes the polyol, the blowing or expanding agent and auxiliary chemicals, like catalysts, surfactants, stabilizers, chain extenders, cross-linkers, water, fire retardants, smoke suppressants, pigments, coloring materials, fillers, etc.

To prepare the foam, appropriate amounts of A-side and B-side are then combined to react.

When preparing a foam by a process disclosed herein, it is generally preferred to employ a minor amount of a surfactant to stabilize the foaming reaction mixture until it cures. Such surfactants may comprise a liquid or solid organosilicone compound. Other, less preferred surfactants include polyethylene glycol ethers of long chain alcohols, tertiary amine or alkanolamine salts of long chain alkyl acid sulfate esters, alkyl sulfonic esters and alkyl arylsulfonic acids. The surfactants are employed in amounts sufficient to stabilize the foaming reaction mixture against collapse and to prevent the formation of large, uneven cells. About 0.2 to about 5 parts or even more of the surfactant per 100 parts by weight of polyol are usually sufficient.

One or more catalysts for the reaction of the polyol with the polyisocyanate may also be used. Any suitable urethane catalyst may be used, including tertiary amine compounds and organometallic compounds. Such catalysts are used in an amount which measurably increases the rate of reaction of the polyisocyanate. Typical amounts are about 0.1 to about 5 parts of catalyst per 100 parts by weight of polyol.

Thus, in one aspect, the invention is directed to a closed cell foam prepared by foaming a foamable composition in the presence of a blowing agent described above.

Another aspect is for a foam premix composition comprising a polyol and a blowing agent described above.

Additionally, one aspect is for a method of forming a foam comprising:

(a) adding to a foamable composition a blowing agent described above; and
(b) reacting the foamable composition under conditions effective to form a foam.

In the context of polyurethane foams, the terms "foamable composition" and "foamable component" shall be understood herein to mean isocyanate or an isocyanate-containing mixture. In the context of polystyrene foams, the terms "foamable composition" and "foamable component" shall be understood herein to mean a polyolefin or a polyolefin-containing mixture.

A further aspect is for a method of forming a polyisocyanate-based foam comprising reacting at least one organic polyisocyanate with at least one active hydrogen-containing compound in the presence of a blowing agent described above. Another aspect is for a polyisocyanate foam produced by said method.

Propellants

Another embodiment of the present invention relates to the use of an inventive composition as described herein for use as a propellant in sprayable composition. Additionally, the present invention relates to a sprayable composition comprising an inventive composition as described herein. The active ingredient to be sprayed together with inert ingredients, solvents and other materials may also be present in a sprayable composition. Preferably, the sprayable composition is an aerosol. Suitable active materials to be sprayed include, without limitations, cosmetic materials, such as deodorants, perfumes, hair sprays, cleaners, and polishing agents as well as medicinal materials such as anti-asthma and anti-halitosis medications.

The present invention further relates to a process for producing aerosol products comprising the step of adding an inventive composition as described herein to active ingredients in an aerosol container, wherein said composition functions as a propellant.

Solvents

The inventive compositions may also be used as inert media for polymerization reactions, fluids for removing particulates from metal surfaces, as carrier fluids that may be used, for example, to place a fine film of lubricant on metal parts or as buffing abrasive agents to remove buffing abrasive compounds from polished surfaces such as metal. They are also used as displacement drying agents for removing water, such as from jewelry or metal parts, as resist developers in conventional circuit manufacturing techniques including chlorine-type developing agents, or as strippers for photoresists when used with, for example, a chlorohydrocarbon such as 1,1,1-trichloroethane or trichloroethylene. It is desirable to identify new agents for these applications with reduced global warming potential.

Binary azeotropic or azeotrope-like compositions of substantially constant-boiling mixtures can be characterized, depending upon the conditions chosen, in a number of ways. For example, it is well known by those skilled in the art, that, at different pressures the composition of a given azeotrope or azeotrope-like composition will vary at least to some degree, as will the boiling point temperature. Thus, an azeotropic or azeotrope-like composition of two compounds represents a unique type of relationship but with a variable composition that depends on temperature and/or pressure. Therefore, compositional ranges, rather than fixed compositions, are often used to define azeotropes and azeotrope-like compositions.

As used herein, the term "azeotropic composition" shall be understood to mean a composition where at a given temperature at equilibrium, the boiling point pressure (of the liquid phase) is identical to the dew point pressure (of the vapor phase), i.e., $X_2 = Y_2$. One way to characterize an azeotropic composition is that the vapor produced by partial evaporation or distillation of the liquid has the same composition as the liquid from which it was evaporated or distilled, that is, the admixture distills/refluxes without compositional change. Constant boiling compositions are characterized as azeotropic because they exhibit either a maximum or minimum boiling point, as compared with that of the non-azeotropic mixtures of the same components. Azeotropic compositions are also characterized by a minimum or a maximum in the vapor pressure of the mixture relative to the vapor pressure of the neat components at a constant temperature.

As used herein, the terms "azeotrope-like composition" and "near-azeotropic composition" shall be understood to mean a composition wherein the difference between the bubble point pressure ("BP") and dew point pressure ("DP") of the composition at a particular temperature is less than or equal to 5 percent based upon the bubble point pressure, i.e., [(BP-VP)/BP] x 100 ≤ 5. As used herein, the terms "3 percent azeotrope-like composition" and "3 percent near-azeotropic composition" shall be understood to mean a composition wherein the difference between the bubble point pressure ("BP") and dew point pressure ("DP") of the composition at a particular temperature is less than or equal to 3 percent based upon the bubble point pressure, i.e., [(BP-VP)/BP] x 100 ≤ 3.

For purposes of this invention, "effective amount" is defined as the amount of each component of the inventive compositions which, when combined, results in the formation of an azeotropic or azeotrope-like composition. This definition includes the amounts of each component, which amounts may vary depending on the pressure applied to the composition so long as the azeotropic or azeotrope-like compositions continue to exist at the different pressures, but with possible different boiling points. Therefore, effective amount includes the amounts, such as may be expressed in weight percentages, of each component of the compositions of the instant invention which form azeotropic or azeotrope-like compositions at temperatures or pressures other than as described herein.

As used herein, the term "mole fraction" shall be understood to mean the ratio of the number of moles of one component in the binary composition to the sum of the numbers of moles of each of the two components in said composition (e.g., $X_2 = m_2/(m_1 + m_2)$).

To determine the relative volatility of any two compounds, a method known as the PTx method can be used. In this procedure, the total absolute pressure in a cell of known volume is measured at a constant temperature for various compositions of the two compounds. Use of the PTx Method is described in detail in "Phase Equilibrium in Process Design", Wiley-Interscience Publisher, 1970, written by Harold R. Null, on pages 124 to 126; hereby incorporated by reference. The resulting pressure v. liquid composition data are alternately referred to as Vapor Liquid Equilibria data (or "VLE data.")

These measurements can be converted into equilibrium vapor and liquid compositions in the PTx cell by using an activity coefficient equation model, such as the Non-Random, Two-Liquid (NRTL) equation, to represent liquid phase nonidealities. Use of an activity coefficient equation, such as the NRTL equation is described in detail in "The Properties of Gases and Liquids," 4th edition, published by McGraw Hill, written by Reid, Prausnitz and Poling, on pages 241 to 387, and in "Phase Equilibria in Chemical Engineering," published by Butterworth Publishers, 1985, written by Stanley M. Walas, pages 165 to 244. The collection of VLE data, the determination of interaction parameters by regression and the use of an equation of state to predict non-ideal behavior of a system are taught in "Double Azeotropy in Binary Mixtures of NH3 and CHF2CF2," C.-P. Chai Kao, M.E. Paulaitis, A. Yokozeki, Fluid Phase Equilibria, 127 (1997) 191-203. All of the aforementioned references are hereby incorporated by reference. Without wishing to be bound by any theory or explanation, it is believed that the NRTL equation, together with the PTx cell data, can sufficiently predict the relative volatilities of the Z-HFO-1336mzz-containing compositions of the present invention and can therefore predict the behavior of these mixtures in multi-stage separation equipment such as distillation columns.

A claim, or an element in a claim for a combination, may be expressed herein as a means or step for performing a specified function without the recital of structure, material or acts in support thereof, and such claim shall be construed to cover the corresponding material or acts described in the specification and equivalents thereof. Thus, for example, the term "compositional means for forming an azeotrope or near-azeotrope of Z-HFO-1336mzz and a second component" shall be understood to mean the azeotropes and near-azeotropes taught in the specification, including those tabulated, and equivalents thereof.

For economy of space in the tables that follow, "Z-HFO-1336mzz" may be abbreviated to "Z1336mzz."

EXAMPLE 1: Z-HFO-1336mzz/n-Butane

The binary system of Z-HFO-1336mzz/n-butane was explored for potential azeotropic and near-azeotropic behavior. To determine the relative volatility of this binary system, the PTx method described above was used. The pressure in a PTx cell of known volume was measured at constant temperature of 29.95 °C for various binary compositions. The collected experimental data are displayed in Table 1.1 below.

Table 1.1. Experimental VLE Data on the Z-HFO-1336mzz/n-Butane System at 29.95 °C.

| X2 | Y2 | psia,expt | psia,calc | Pcalc - Pexpt |
|---|---|---|---|---|
| 0.000 | 0.000 | 12.960 | | |
| 0.051 | 0.355 | 19.610 | 19.544 | -0.066 |
| 0.111 | 0.521 | 25.330 | 25.371 | 0.041 |
| 0.180 | 0.614 | 30.170 | 30.261 | 0.090 |
| 0.253 | 0.669 | 33.900 | 33.871 | -0.029 |
| 0.325 | 0.705 | 36.480 | 36.456 | -0.024 |
| 0.397 | 0.731 | 38.360 | 38.334 | -0.026 |
| 0.474 | 0.752 | 39.780 | 39.810 | 0.030 |
| 0.607 | 0.782 | 41.560 | 41.538 | -0.022 |
| 0.677 | 0.797 | 42.200 | 42.177 | -0.023 |
| 0.747 | 0.815 | 42.710 | 42.667 | -0.043 |
| 0.807 | 0.834 | 42.900 | 42.957 | 0.057 |
| 0.868 | 0.861 | 43.000 | 43.038 | 0.038 |
| 0.924 | 0.900 | 42.720 | 42.728 | 0.008 |
| 0.967 | 0.947 | 41.980 | 41.972 | -0.008 |
| 1.000 | 1.000 | 40.860 | | |
| $X_2$ = liquid mole fraction of n-butane<br>$Y_2$ = vapor mole fraction of n-butane.<br>$P_{exp}$ = experimentally measured pressure.<br>$P_{calc}$ = pressure as calculated by NRTL model. | | | | |

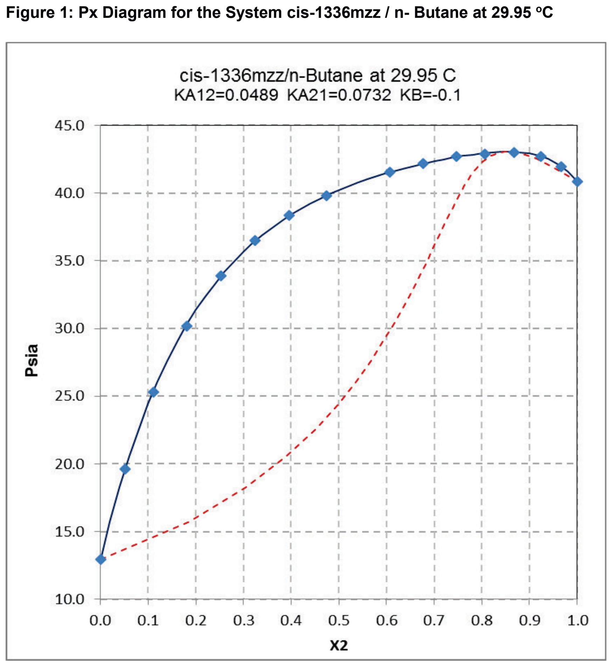

Figure 1 displays a plot of the pressure vs composition data over the compositional range of 0-1 liquid mole fraction of n-butane. The top curve represents the bubble point ("BP") locus, and the bottom curve represents the dew point ("DP") locus. Figure 1 demonstrates the formation of an azeotrope at 29.95 °C, of composition 0.856 mole fraction n-butane and 0.144 mole fraction Z-HFO-1336mzz (cis-1336mzz), as evidenced by the maximum in the Px diagram at a pressure of 43.4 psia.

Based on these VLE data, interaction coefficients were extracted. The NRTL model was run over the temperature range of -40 to 120 °C in increments of 10 °C allowing pressure to vary such that the azeotropic condition ($X_2 = Y_2$) was met. The resulting predictions of azeotropes in the Z-HFO-1336mzz/n-butane system are displayed in Table 1.2, along with the experimental results obtained at 29.95 °C.

Table 1.2 Azeotropes of the Z-HFO-1336mzz/n-Butane System from -40 to 120 °C

| TEMP ° C | AZEOTROPE PRESSURE PSIA | Z1336MZZ VAPOR MOL-FRAC | N-BUTANE VAPOR MOL-FRAC |
|---|---|---|---|
| -40 | 2.5 | 0.0813 | 0.9187 |
| -30 | 4.3 | 0.0923 | 0.9077 |
| -20 | 6.9 | 0.1029 | 0.8971 |
| -10 | 10.6 | 0.1129 | 0.8871 |
| 0 | 15.8 | 0.1221 | 0.8779 |
| 10 | 22.8 | 0.1304 | 0.8696 |
| 20 | 31.9 | 0.1377 | 0.8623 |
| 29.95 | 43.4 | 0.1439 | 0.8561 |
| 30 | 43.5 | 0.1440 | 0.8560 |
| 40 | 58.0 | 0.1492 | 0.8508 |
| 50 | 75.8 | 0.1533 | 0.8467 |
| 60 | 97.2 | 0.1563 | 0.8437 |
| 70 | 122.8 | 0.1581 | 0.8419 |
| 80 | 152.9 | 0.1589 | 0.8411 |
| 90 | 188.0 | 0.1586 | 0.8414 |
| 100 | 228.7 | 0.1576 | 0.8424 |
| 110 | 275.5 | 0.1567 | 0.8433 |
| 120 | 329.4 | 0.1601 | 0.8399 |

The NRTL model was used to predict azeotropes over a pressure range of 1-24 atm at 1 atm increments, the results of which are displayed in Table 1.3.

Table 1.3. Azeotropes of the Z-HFO-1336mzz/n-Butane System from 1 to 24 Atm

| PRESSURE ATM | AZEOTROPE TEMP C | Z1336MZZ VAPOR MOL-FRAC | N-BUTANE VAPOR MOL-FRAC |
|---|---|---|---|
| 1 | -1.9 | 0.1204 | 0.8796 |
| 2 | 17.5 | 0.1360 | 0.8640 |
| 3 | 30.5 | 0.1442 | 0.8558 |
| 4 | 40.5 | 0.1494 | 0.8506 |
| 5 | 48.8 | 0.1528 | 0.8472 |
| 6 | 56.0 | 0.1552 | 0.8448 |
| 7 | 62.4 | 0.1568 | 0.8432 |
| 8 | 68.1 | 0.1579 | 0.8421 |
| 9 | 73.3 | 0.1585 | 0.8415 |
| 10 | 78.1 | 0.1588 | 0.8412 |
| 11 | 82.6 | 0.1589 | 0.8411 |
| 12 | 86.8 | 0.1588 | 0.8412 |
| 13 | 90.8 | 0.1585 | 0.8415 |

(continued)

| PRESSURE ATM | AZEOTROPE TEMP C | Z1336MZZ VAPOR MOL-FRAC | N-BUTANE VAPOR MOL-FRAC |
|---|---|---|---|
| 14 | 94.5 | 0.1582 | 0.8418 |
| 15 | 98.1 | 0.1578 | 0.8422 |
| 16 | 101.5 | 0.1574 | 0.8426 |
| 17 | 104.7 | 0.1570 | 0.8430 |
| 18 | 107.8 | 0.1568 | 0.8432 |
| 19 | 110.7 | 0.1567 | 0.8433 |
| 20 | 113.6 | 0.1570 | 0.8430 |
| 21 | 116.3 | 0.1577 | 0.8423 |
| 22 | 118.9 | 0.1592 | 0.8408 |
| 23 | 121.5 | 0.1619 | 0.8381 |
| 24 | 123.9 | 0.1670 | 0.8330 |

The model was run over a temperature range from -40 to 120 °C in 20 °C increments, and also at 29.95 °C for the purpose of comparison to experimentally measured results. At each temperature, the model was run over the full range from 0 to 1 of Z-HFO-1336mzz liquid molar composition in increments of 0.002. Thus the model was run at a total of 5010 combinations of temperature and Z-HFO-1336mzz liquid molar composition (10 temperatures x 501 compositions = 5010). Among those 5010 combinations, some qualify as azeotropic or near-azeotropic, and it is these combinations that Applicant claims. For purposes of brevity, the listing of the 5010 combinations was edited to reflect increments of 0.10 Z-HFO-1336mzz liquid molar composition, or the boundaries of near-azeotropic behavior. The resulting abridged listing is presented in Table 1.4.

Table 1.4. Near-Azeotropes of the Z-HFO-1336mzz/n-Butane System

| TEMP C | LIQUID MOLEF RAC Z-1336mz z | VAPOR MOLEF RAC Z-1336m zz | LIQUID MOLEFR AC n-Butane | VAPOR MOLEF RAC n-Butane | Bubble Point Pressur e | Dew Point Pressur e | (BP-DP)/BP X 100% |
|---|---|---|---|---|---|---|---|
| | | | | | (psia) | (psia) | |
| -40.0 | 0.000 | 0.000 | 1.000 | 1.000 | 2.417 | 2.417 | 0.00% |
| -40.0 | 0.002 | 0.006 | 0.998 | 0.994 | 2.426 | 2.420 | 0.24% |
| -40.0 | 0.100 | 0.085 | 0.900 | 0.915 | 2.516 | 2.471 | 1.77% |
| -40.0 | 0.104 | 0.086 | 0.896 | 0.914 | 2.515 | 2.446 | 2.76% |
| -40.0 | 0.106 | 0.086 | 0.894 | 0.914 | 2.515 | 2.432 | 3.31% |
| -40.0 | 0.110 | 0.086 | 0.890 | 0.914 | 2.515 | 2.402 | 4.48% |
| -40.0 | 0.112 | 0.087 | 0.888 | 0.913 | 2.514 | 2.386 | 5.11% |
| -20.0 | 0.000 | 0.000 | 1.000 | 1.000 | 6.550 | 6.550 | 0.00% |
| -20.0 | 0.002 | 0.005 | 0.998 | 0.995 | 6.571 | 6.558 | 0.20% |
| -20.0 | 0.100 | 0.102 | 0.900 | 0.898 | 6.866 | 6.866 | 0.01% |
| -20.0 | 0.138 | 0.112 | 0.862 | 0.888 | 6.859 | 6.660 | 2.91% |
| -20.0 | 0.140 | 0.112 | 0.860 | 0.888 | 6.858 | 6.631 | 3.31% |
| -20.0 | 0.146 | 0.113 | 0.854 | 0.887 | 6.856 | 6.538 | 4.64% |
| -20.0 | 0.148 | 0.113 | 0.852 | 0.887 | 6.855 | 6.504 | 5.12% |
| 0.0 | 0.000 | 0.000 | 1.000 | 1.000 | 15.015 | 15.015 | 0.00% |
| 0.0 | 0.002 | 0.005 | 0.998 | 0.995 | 15.057 | 15.033 | 0.16% |

(continued)

| TEMP C | LIQUID MOLEF RAC Z-1336mz z | VAPOR MOLEF RAC Z-1336m zz | LIQUID MOLEFR AC n-Butane | VAPOR MOLEF RAC n-Butane | Bubble Point Pressur e | Dew Point Pressur e | (BP-DP)/BP X 100% |
|---|---|---|---|---|---|---|---|
| | | | | | (psia) | (psia) | |
| 0.0 | 0.100 | 0.112 | 0.900 | 0.888 | 15.794 | 15.755 | 0.24% |
| 0.0 | 0.170 | 0.137 | 0.830 | 0.863 | 15.773 | 15.319 | 2.87% |
| 0.0 | 0.172 | 0.137 | 0.828 | 0.863 | 15.770 | 15.270 | 3.17% |
| 0.0 | 0.182 | 0.140 | 0.818 | 0.860 | 15.758 | 14.993 | 4.85% |
| 0.0 | 0.184 | 0.140 | 0.816 | 0.860 | 15.755 | 14.932 | 5.22% |
| 20.0 | 0.000 | 0.000 | 1.000 | 1.000 | 30.251 | 30.251 | 0.00% |
| 20.0 | 0.002 | 0.004 | 0.998 | 0.996 | 30.322 | 30.285 | 0.12% |
| 20.0 | 0.100 | 0.117 | 0.900 | 0.883 | 31.813 | 31.680 | 0.42% |
| 20.0 | 0.200 | 0.161 | 0.800 | 0.839 | 31.768 | 30.858 | 2.87% |
| 20.0 | 0.202 | 0.161 | 0.798 | 0.839 | 31.762 | 30.781 | 3.09% |
| 20.0 | 0.216 | 0.165 | 0.784 | 0.835 | 31.716 | 30.169 | 4.88% |
| 20.0 | 0.218 | 0.166 | 0.782 | 0.834 | 31.709 | 30.071 | 5.16% |
| 20.0 | 0.994 | 0.919 | 0.006 | 0.081 | 9.499 | 8.811 | 7.24% |
| 20.0 | 0.996 | 0.944 | 0.004 | 0.056 | 9.256 | 8.794 | 4.99% |
| 20.0 | 0.998 | 0.971 | 0.002 | 0.029 | 9.009 | 8.777 | 2.58% |
| 20.0 | 1.000 | 1.000 | 0.000 | 0.000 | 8.760 | 8.760 | 0.00% |
| 29.95 | 0.000 | 0.000 | 1.000 | 1.000 | 41.227 | 41.227 | 0.00% |
| 29.95 | 0.002 | 0.004 | 0.998 | 0.996 | 41.315 | 41.272 | 0.10% |
| 29.95 | 0.100 | 0.118 | 0.900 | 0.882 | 43.302 | 43.108 | 0.45% |
| 29.95 | 0.200 | 0.167 | 0.800 | 0.833 | 43.293 | 42.562 | 1.69% |
| 29.95 | 0.214 | 0.172 | 0.786 | 0.828 | 43.232 | 41.999 | 2.85% |
| 29.95 | 0.216 | 0.173 | 0.784 | 0.827 | 43.222 | 41.906 | 3.05% |
| 29.95 | 0.232 | 0.178 | 0.768 | 0.822 | 43.141 | 41.055 | 4.83% |
| 29.95 | 0.234 | 0.178 | 0.766 | 0.822 | 43.130 | 40.936 | 5.09% |
| 29.95 | 0.994 | 0.933 | 0.006 | 0.067 | 13.811 | 12.996 | 5.90% |
| 29.95 | 0.996 | 0.954 | 0.004 | 0.046 | 13.518 | 12.971 | 4.05% |
| 29.95 | 0.998 | 0.976 | 0.002 | 0.024 | 13.221 | 12.946 | 2.08% |
| 29.95 | 1.000 | 1.000 | 0.000 | 0.000 | 12.921 | 12.921 | 0.00% |
| 40.0 | 0.000 | 0.000 | 1.000 | 1.000 | 55.119 | 55.119 | 0.00% |
| 40.0 | 0.002 | 0.004 | 0.998 | 0.996 | 55.226 | 55.177 | 0.09% |
| 40.0 | 0.100 | 0.118 | 0.900 | 0.882 | 57.786 | 57.529 | 0.45% |
| 40.0 | 0.200 | 0.173 | 0.800 | 0.827 | 57.835 | 57.236 | 1.04% |
| 40.0 | 0.228 | 0.183 | 0.772 | 0.817 | 57.662 | 56.008 | 2.87% |
| 40.0 | 0.230 | 0.184 | 0.770 | 0.816 | 57.648 | 55.895 | 3.04% |
| 40.0 | 0.248 | 0.190 | 0.752 | 0.810 | 57.508 | 54.741 | 4.81% |
| 40.0 | 0.250 | 0.191 | 0.750 | 0.809 | 57.492 | 54.598 | 5.03% |

(continued)

| TEMP C | LIQUID MOLEF RAC Z-1336mz z | VAPOR MOLEF RAC Z-1336m zz | LIQUID MOLEFR AC n-Butane | VAPOR MOLEF RAC n-Butane | Bubble Point Pressur e | Dew Point Pressur e | (BP-DP)/BP X 100% |
|---|---|---|---|---|---|---|---|
| | | | | | (psia) | (psia) | |
| 40.0 | 0.992 | 0.927 | 0.008 | 0.073 | 19.968 | 18.716 | 6.27% |
| 40.0 | 0.994 | 0.944 | 0.006 | 0.056 | 19.624 | 18.680 | 4.81% |
| 40.0 | 0.996 | 0.962 | 0.004 | 0.038 | 19.277 | 18.644 | 3.28% |
| 40.0 | 0.998 | 0.980 | 0.002 | 0.020 | 18.927 | 18.609 | 1.68% |
| 40.0 | 1.000 | 1.000 | 0.000 | 0.000 | 18.573 | 18.573 | 0.00% |
| 60.0 | 0.000 | 0.000 | 1.000 | 1.000 | 92.816 | 92.816 | 0.00% |
| 60.0 | 0.002 | 0.003 | 0.998 | 0.997 | 92.961 | 92.905 | 0.06% |
| 60.0 | 0.100 | 0.116 | 0.900 | 0.884 | 96.816 | 96.455 | 0.37% |
| 60.0 | 0.200 | 0.181 | 0.800 | 0.819 | 97.034 | 96.591 | 0.46% |
| 60.0 | 0.256 | 0.207 | 0.744 | 0.793 | 96.366 | 93.507 | 2.97% |
| 60.0 | 0.258 | 0.208 | 0.742 | 0.792 | 96.335 | 93.345 | 3.10% |
| 60.0 | 0.282 | 0.218 | 0.718 | 0.782 | 95.928 | 91.142 | 4.99% |
| 60.0 | 0.284 | 0.218 | 0.716 | 0.782 | 95.892 | 90.939 | 5.16% |
| 60.0 | 0.990 | 0.936 | 0.010 | 0.064 | 37.728 | 35.779 | 5.17% |
| 60.0 | 0.992 | 0.948 | 0.008 | 0.052 | 37.277 | 35.711 | 4.20% |
| 60.0 | 0.994 | 0.960 | 0.006 | 0.040 | 36.823 | 35.643 | 3.20% |
| 60.0 | 0.996 | 0.973 | 0.004 | 0.027 | 36.366 | 35.575 | 2.17% |
| 60.0 | 0.998 | 0.986 | 0.002 | 0.014 | 35.905 | 35.508 | 1.11% |
| 60.0 | 1.000 | 1.000 | 0.000 | 0.000 | 35.441 | 35.441 | 0.00% |
| 80.0 | 0.000 | 0.000 | 1.000 | 1.000 | 146.887 | 146.887 | 0.00% |
| 80.0 | 0.002 | 0.003 | 0.998 | 0.997 | 147.067 | 147.011 | 0.04% |
| 80.0 | 0.100 | 0.113 | 0.900 | 0.887 | 152.251 | 151.859 | 0.26% |
| 80.0 | 0.200 | 0.186 | 0.800 | 0.814 | 152.641 | 152.266 | 0.25% |
| 80.0 | 0.282 | 0.231 | 0.718 | 0.769 | 150.837 | 146.444 | 2.91% |
| 80.0 | 0.284 | 0.232 | 0.716 | 0.768 | 150.775 | 146.221 | 3.02% |
| 80.0 | 0.314 | 0.247 | 0.686 | 0.753 | 149.756 | 142.462 | 4.87% |
| 80.0 | 0.316 | 0.248 | 0.684 | 0.752 | 149.682 | 142.186 | 5.01% |
| 80.0 | 0.984 | 0.928 | 0.016 | 0.072 | 66.699 | 63.157 | 5.31% |
| 80.0 | 0.986 | 0.936 | 0.014 | 0.064 | 66.149 | 63.038 | 4.70% |
| 80.0 | 0.990 | 0.953 | 0.010 | 0.047 | 65.039 | 62.800 | 3.44% |
| 80.0 | 0.992 | 0.962 | 0.008 | 0.038 | 64.480 | 62.682 | 2.79% |
| 80.0 | 0.998 | 0.990 | 0.002 | 0.010 | 62.785 | 62.330 | 0.72% |
| 80.0 | 1.000 | 1.000 | 0.000 | 0.000 | 62.214 | 62.214 | 0.00% |
| 100.0 | 0.000 | 0.000 | 1.000 | 1.000 | 221.362 | 221.362 | 0.00% |
| 100.0 | 0.002 | 0.003 | 0.998 | 0.997 | 221.568 | 221.520 | 0.02% |
| 100.0 | 0.100 | 0.109 | 0.900 | 0.891 | 227.849 | 227.518 | 0.15% |

(continued)

| TEMP C | LIQUID MOLEF RAC Z-1336mz z | VAPOR MOLEF RAC Z-1336m zz | LIQUID MOLEFR AC n-Butane | VAPOR MOLEF RAC n-Butane | Bubble Point Pressur e | Dew Point Pressur e | (BP-DP)/BP X 100% |
|---|---|---|---|---|---|---|---|
| | | | | | (psia) | (psia) | |
| 100.0 | 0.200 | 0.189 | 0.800 | 0.811 | 228.291 | 227.939 | 0.15% |
| 100.0 | 0.300 | 0.254 | 0.700 | 0.746 | 224.507 | 219.081 | 2.42% |
| 100.0 | 0.314 | 0.262 | 0.686 | 0.738 | 223.702 | 217.007 | 2.99% |
| 100.0 | 0.316 | 0.263 | 0.684 | 0.737 | 223.582 | 216.695 | 3.08% |
| 100.0 | 0.354 | 0.285 | 0.646 | 0.715 | 221.066 | 210.097 | 4.96% |
| 100.0 | 0.356 | 0.286 | 0.644 | 0.714 | 220.922 | 209.718 | 5.07% |
| 100.0 | 0.976 | 0.922 | 0.024 | 0.078 | 110.032 | 104.514 | 5.02% |
| 100.0 | 0.978 | 0.928 | 0.022 | 0.072 | 109.394 | 104.319 | 4.64% |
| 100.0 | 0.986 | 0.953 | 0.014 | 0.047 | 106.818 | 103.545 | 3.06% |
| 100.0 | 0.988 | 0.959 | 0.012 | 0.041 | 106.168 | 103.353 | 2.65% |
| 100.0 | 0.998 | 0.993 | 0.002 | 0.007 | 102.880 | 102.403 | 0.46% |
| 100.0 | 1.000 | 1.000 | 0.000 | 0.000 | 102.215 | 102.215 | 0.00% |
| 120.0 | 0.000 | 0.000 | 1.000 | 1.000 | 321.024 | 321.024 | 0.00% |
| 120.0 | 0.002 | 0.002 | 0.998 | 0.998 | 321.239 | 321.206 | 0.01% |
| 120.0 | 0.100 | 0.106 | 0.900 | 0.894 | 328.267 | 328.026 | 0.07% |
| 120.0 | 0.200 | 0.194 | 0.800 | 0.806 | 328.915 | 328.700 | 0.07% |
| 120.0 | 0.300 | 0.270 | 0.700 | 0.730 | 323.465 | 319.449 | 1.24% |
| 120.0 | 0.358 | 0.311 | 0.642 | 0.689 | 317.621 | 308.254 | 2.95% |
| 120.0 | 0.360 | 0.313 | 0.640 | 0.687 | 317.385 | 307.794 | 3.02% |
| 120.0 | 0.400 | 0.340 | 0.600 | 0.660 | 312.240 | 297.763 | 4.64% |
| 120.0 | 0.408 | 0.345 | 0.592 | 0.655 | 311.113 | 295.598 | 4.99% |
| 120.0 | 0.410 | 0.346 | 0.590 | 0.654 | 310.827 | 295.050 | 5.08% |
| 120.0 | 0.958 | 0.902 | 0.042 | 0.098 | 174.387 | 165.514 | 5.09% |
| 120.0 | 0.960 | 0.906 | 0.040 | 0.094 | 173.687 | 165.211 | 4.88% |
| 120.0 | 0.976 | 0.942 | 0.024 | 0.058 | 168.031 | 162.821 | 3.10% |
| 120.0 | 0.978 | 0.946 | 0.022 | 0.054 | 167.316 | 162.527 | 2.86% |
| 120.0 | 0.998 | 0.995 | 0.002 | 0.005 | 160.084 | 159.636 | 0.28% |
| 120.0 | 1.000 | 1.000 | 0.000 | 0.000 | 159.352 | 159.352 | 0.00% |

Near-azeotropes formed between Z-1336mzz and n-butane at 1 atm are shown in Table 1.5. For purposes of brevity, the listing of the combinations was edited to reflect increments of 0.10 Z-HFO-1336mzz liquid molar composition, or the boundaries of near-azeotropic behavior. The resulting abridged listing is presented in Table 1.5.

Table 1.5. Near-Azeotropes of the Z-HFO-1336mzz/n-Butane System at 1 atm

| TEMP | LIQUID MOLEFR AC | VAPOR MOLEFR AC | LIQUID MOLEFR AC | VAPOR MOLEFR AC | Bubble Point | Dew Point | (BP-DP)/BP X 100% |
|---|---|---|---|---|---|---|---|
| C | Z-1336mzz | Z-1336mzz | n-Butane | n-Butane | Press-ure | Press-ure | |
| -0.56 | 0.000 | 0.000 | 1.000 | 1.000 | 14.69 6 | 14.69 6 | 0.00% |
| -0.64 | 0.002 | 0.005 | 0.998 | 0.995 | 14.69 6 | 14.67 2 | 0.20% |
| -1.88 | 0.100 | 0.112 | 0.900 | 0.888 | 14.69 6 | 14.66 4 | 0.20% |
| -1.85 | 0.166 | 0.134 | 0.834 | 0.866 | 14.69 6 | 14.29 8 | 2.70% |
| -1.84 | 0.168 | 0.135 | 0.832 | 0.865 | 14.69 6 | 14.25 4 | 3.00% |
| -1.82 | 0.178 | 0.137 | 0.822 | 0.863 | 14.69 6 | 14.00 6 | 4.70% |
| -1.82 | 0.180 | 0.137 | 0.820 | 0.863 | 14.69 6 | 13.95 1 | 5.10% |
| 31.67 | 0.994 | 0.935 | 0.006 | 0.065 | 14.69 6 | 13.85 8 | 5.70% |
| 32.25 | 0.996 | 0.956 | 0.004 | 0.044 | 14.69 6 | 14.12 9 | 3.90% |
| 32.83 | 0.998 | 0.978 | 0.002 | 0.022 | 14.69 6 | 14.40 8 | 2.00% |
| 33.43 | 1.000 | 1.000 | 0.000 | 0.000 | 14.69 6 | 14.69 6 | 0.00% |

The detailed data in Tables 1.4 and 1.5 are broadly summarized in Tables 1.6 below. From the results in Table 1.5, azeotrope-like compositions with differences of 3% or less between bubble point pressures and dew point pressures exist from 0.5 to 13.4 mole percent Z-1336mzz and from 86.6 to 99.5 mole percent n-butane at 1 atmosphere pressure boiling at from -0.64 to -1.85 °C.

The broad ranges of 3% azeotrope-like compositions (based on [(BP-VP)/BP] x 100 $\leq$ 3) are listed in Table 1.6.

Table 1.6. Summaries of 3% Near-Azeotropes of the Z-HFO-1336mzz/n-Butane System

| Components | T (°C) | Z-HFO-1336mzz Vapor Mole Percentage Range (Remainder n-Butane) |
|---|---|---|
| Z-HFO-1336mzz / n-Butane | -40 | 0.6 - 8.6 |
| Z-HFO-1336mzz / n-Butane | -20 | 0.5 - 11.2 |
| Z-HFO-1336mzz / n-Butane | 0 | 0.5 - 13.7 |
| Z-HFO-1336mzz / n-Butane | 20 | 0.4 - 16.1 |
| Z-HFO-1336mzz / n-Butane | 29.95 | 0.4 - 17.2 |
| Z-HFO-1336mzz / n-Butane | 40 | 0.4 - 18.4 |
| Z-HFO-1336mzz / n-Butane | 60 | 0.3 - 20.7 |
| Z-HFO-1336mzz / n-Butane | 80 | 0.3 - 23.2 |
| Z-HFO-1336mzz / n-Butane | 100 | 0.3 - 26.2 |
| Z-HFO-1336mzz / n-Butane | 120 | 0.2 - 31.3 |

**EXAMPLE 2: Z-HFO-1336mzz/Isobutane**

The binary system of Z-HFO-1336mzz/Isobutane was explored for potential azeotropic and near-azeotropic behavior. To determine the relative volatility of this binary system, the PTx method described above was used. The pressure in a PTx cell of known volume was measured at constant temperature of 29.94 °C for various binary compositions. The collected experimental data are displayed in Table 2.1 below.

Table 2-1. VLE Data for the Z-HFO-1336mzz/Isobutane

| X2 | Y2 | psia,expt | psia,calc | Pcalc - Pexpt |
|---|---|---|---|---|
| 0.00000 | 0.00000 | 12.920 | | |
| 0.04851 | 0.40385 | 21.250 | 21.220 | -0.001 |
| 0.10299 | 0.56997 | 28.630 | 28.634 | 0.000 |
| 0.17005 | 0.66652 | 35.620 | 35.642 | 0.001 |
| 0.23721 | 0.71998 | 40.920 | 40.925 | 0.000 |
| 0.30979 | 0.75662 | 45.220 | 45.229 | 0.000 |
| 0.38684 | 0.78351 | 48.670 | 48.664 | 0.000 |
| 0.46319 | 0.80370 | 51.330 | 51.268 | -0.001 |
| 0.59767 | 0.83233 | 54.630 | 54.642 | 0.000 |
| 0.66765 | 0.84654 | 56.000 | 56.024 | 0.000 |
| 0.73653 | 0.86188 | 57.240 | 57.233 | 0.000 |
| 0.79953 | 0.87875 | 58.240 | 58.231 | 0.000 |
| 0.86180 | 0.90065 | 59.080 | 59.087 | 0.000 |
| 0.91909 | 0.92937 | 59.630 | 59.645 | 0.000 |
| 0.96643 | 0.96443 | 59.710 | 59.742 | 0.001 |
| 1.00000 | 1.00000 | 59.420 | | |

$X_2$ = liquid mole fraction of isobutane
$Y_2$ = vapor mole fraction of isobutane
$P_{exp}$ = experimentally measured pressure.
$P_{calc}$ = pressure as calculated by NRTL model.

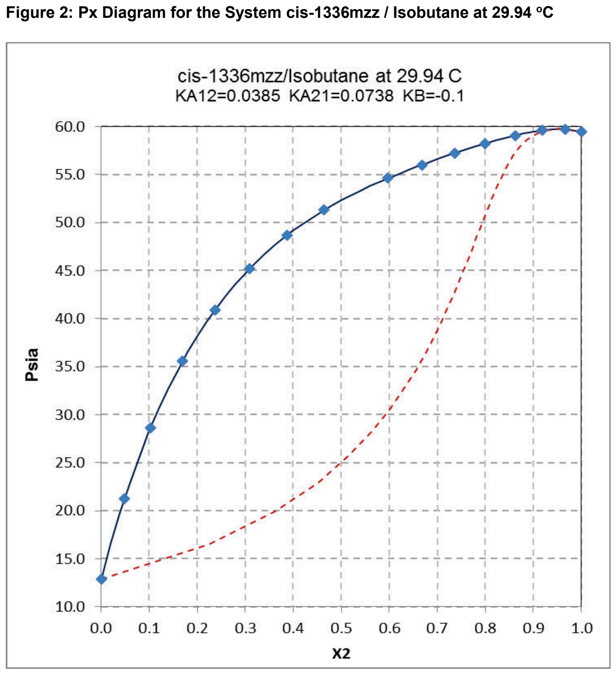

The above vapor pressure vs. isobutane liquid mole fraction data are plotted in Figure 2. The experimental data points are shown in Figure 2 as solid points. The solid line represents bubble point predictions using the NRTL equation. The dashed line represents predicted dew points. Figure 2 demonstrates the formation of an azeotrope at 29.94 °C, of composition 0.951 mole fraction isobutane and 0.049 mole fraction Z-HFO-1336mzz (cis-1336mzz), as evidenced by the maximum in the Px diagram at a pressure of 59.5 psia.

Based on these VLE data, interaction coefficients were extracted. The NRTL model was run over the temperature range of -40 to 110 °C in increments of 10 deg. C allowing pressure to vary such that the azeotropic condition ($X_2 = Y_2$) was met. The resulting predicted azeotropes in the Z-HFO-1336mzz/Isobutane (Z1336MZZ / I-BUTANE), and the experimentally determined data at 29.94 °C, are displayed in Table 2.2.

Table 2.2. Azeotropes of the Z-HFO-1336mzz/Isobutane System from -40 to 110 °C

| TEMP | AZEOTROPE PRESSURE | Z1336MZZ VAPOR | I-BUTANE VAPOR |
|---|---|---|---|
| C | PSIA | MOL-FRAC | MOL-FRAC |
| -40 | 4.1 | 0.0277 | 0.9723 |
| -30 | 6.8 | 0.0319 | 0.9681 |
| -20 | 10.6 | 0.0358 | 0.9642 |
| -10 | 15.9 | 0.0395 | 0.9605 |
| 0 | 23.0 | 0.0427 | 0.9573 |
| 10 | 32.5 | 0.0454 | 0.9546 |
| 20 | 44.5 | 0.0476 | 0.9524 |
| 29.94 | 59.5 | 0.0492 | 0.9508 |
| 30 | 59.6 | 0.0492 | 0.9508 |

(continued)

| TEMP | AZEOTROPE PRESSURE | Z1336MZZ VAPOR | I-BUTANE VAPOR |
|---|---|---|---|
| C | PSIA | MOL-FRAC | MOL-FRAC |
| 40 | 78.2 | 0.0502 | 0.9498 |
| 50 | 100.7 | 0.0505 | 0.9495 |
| 60 | 127.6 | 0.0503 | 0.9497 |
| 70 | 159.4 | 0.0495 | 0.9505 |
| 80 | 196.5 | 0.0484 | 0.9516 |
| 90 | 239.5 | 0.0477 | 0.9523 |
| 100 | 289.2 | 0.0488 | 0.9512 |
| 110 | 346.3 | 0.0572 | 0.9428 |

The model was used to predict azeotropes over a pressure range of 1-26 atm at 1 atm increments, the results of which are displayed in Table 2.3.

Table 2.3. Azeotropes of the Z-HFO-1336mzz/Isobutane System from 1 to 26 Atm.

| PRESSURE | AZEOT ROPE TEMP | Z1336MZZ VAPOR | I-BUTANE VAPOR | Z1336 MZZ LIQUID | I-BUTANE LIQUID | Z1336 MZZ LIQUID | I-BUTANE LIQUID |
|---|---|---|---|---|---|---|---|
| ATM | C | MOL-FRAC | MOL-FRAC | MOL-FRAC | MOL-FRAC | WT-FRAC | WT-FRAC |
| 1 | -12.0 | 0.0388 | 0.9612 | 0.0388 | 0.9612 | 0.1022 | 0.8978 |
| 2 | 7.0 | 0.0446 | 0.9554 | 0.0446 | 0.9554 | 0.1165 | 0.8835 |
| 3 | 19.7 | 0.0475 | 0.9525 | 0.0475 | 0.9525 | 0.1235 | 0.8765 |
| 4 | 29.5 | 0.0491 | 0.9509 | 0.0491 | 0.9509 | 0.1273 | 0.8727 |
| 5 | 37.6 | 0.0500 | 0.9500 | 0.0500 | 0.9500 | 0.1294 | 0.8706 |
| 6 | 44.7 | 0.0504 | 0.9496 | 0.0504 | 0.9496 | 0.1304 | 0.8696 |
| 7 | 50.9 | 0.0505 | 0.9495 | 0.0505 | 0.9495 | 0.1306 | 0.8694 |
| 8 | 56.5 | 0.0504 | 0.9496 | 0.0504 | 0.9496 | 0.1304 | 0.8696 |
| 9 | 61.6 | 0.0502 | 0.9498 | 0.0502 | 0.9498 | 0.1298 | 0.8702 |
| 10 | 66.3 | 0.0498 | 0.9502 | 0.0498 | 0.9502 | 0.1290 | 0.8710 |
| 11 | 70.7 | 0.0494 | 0.9506 | 0.0494 | 0.9506 | 0.1280 | 0.8720 |
| 12 | 74.8 | 0.0490 | 0.9510 | 0.0490 | 0.9510 | 0.1270 | 0.8730 |
| 13 | 78.6 | 0.0486 | 0.9514 | 0.0486 | 0.9514 | 0.1260 | 0.8740 |
| 14 | 82.3 | 0.0482 | 0.9518 | 0.0482 | 0.9518 | 0.1251 | 0.8749 |
| 15 | 85.7 | 0.0479 | 0.9521 | 0.0479 | 0.9521 | 0.1244 | 0.8756 |
| 16 | 89.0 | 0.0477 | 0.9523 | 0.0477 | 0.9523 | 0.1239 | 0.8761 |
| 17 | 92.2 | 0.0477 | 0.9523 | 0.0477 | 0.9523 | 0.1239 | 0.8761 |
| 18 | 95.2 | 0.0479 | 0.9521 | 0.0479 | 0.9521 | 0.1243 | 0.8757 |
| 19 | 98.1 | 0.0483 | 0.9517 | 0.0483 | 0.9517 | 0.1253 | 0.8747 |
| 20 | 100.9 | 0.0491 | 0.9509 | 0.0491 | 0.9509 | 0.1273 | 0.8727 |
| 21 | 103.6 | 0.0504 | 0.9496 | 0.0504 | 0.9496 | 0.1303 | 0.8697 |
| 22 | 106.1 | 0.0523 | 0.9477 | 0.0523 | 0.9477 | 0.1347 | 0.8653 |
| 23 | 108.6 | 0.0551 | 0.9449 | 0.0551 | 0.9449 | 0.1412 | 0.8588 |
| 24 | 111.0 | 0.0592 | 0.9408 | 0.0592 | 0.9408 | 0.1508 | 0.8492 |

(continued)

| PRESS URE | AZEOT ROPE TEMP | Z1336MZZ VAPOR | I-BUTANE VAPOR | Z1336 MZZ LIQUID | I-BUTANE LIQUID | Z1336 MZZ LIQUID | I-BUTANE LIQUID |
|---|---|---|---|---|---|---|---|
| ATM | C | MOL-FRAC | MOL-FRAC | MOL-FRAC | MOL-FRAC | WT-FRAC | WT-FRAC |
| 25 | 113.4 | 0.0655 | 0.9345 | 0.0655 | 0.9345 | 0.1652 | 0.8348 |
| 26 | 115.6 | 0.0770 | 0.9230 | 0.0770 | 0.9230 | 0.1907 | 0.8093 |

The model was run over a temperature range from -40 to 120 °C in 20 deg. increments, and also at 29.94 °C for the purpose of comparison to experimentally measured results. At each temperature, the model was run over the full range from 0 to 1 of Z-HFO-1336mzz liquid molar composition in increments of 0.002. Thus the model was run at a total of 5010 combinations of temperature and Z-HFO-1336mzz liquid molar composition (10 temperatures x 501 compositions = 5010). Among those 5010 combinations, some qualify as azeotropic or near-azeotropic, and it is these combinations that Applicant claims. For purposes of brevity, the listing of the 5010 combinations was edited to reflect increments of 0.10 Z-HFO-1336mzz liquid molar composition, or the boundaries of near-azeotropic behavior. The resulting abridged listing is presented in Table 2.4.

Table 2.4. Near-Azeotropes of the Z-HFO-1336mzz/Isobutane System.

| TEMP C | MOLEF RAC Z-1336mz z | MOLEFR AC Z-1336mzz | MOLEF RAC i-Butane | MOLEFR AC i-Butane | Point Pressur e | Point Pressure | (BP-DP)/B P X 100% |
|---|---|---|---|---|---|---|---|
| | | | | | (psia) | (psia) | |
| -40 | 0.000 | 0.000 | 1.000 | 1.000 | 4.114 | 4.114 | 0.00% |
| -40 | 0.002 | 0.003 | 0.998 | 0.997 | 4.118 | 4.117 | 0.00% |
| -40 | 0.060 | 0.042 | 0.940 | 0.958 | 4.125 | 4.008 | 2.80% |
| -40 | 0.062 | 0.043 | 0.938 | 0.957 | 4.124 | 3.974 | 3.60% |
| -40 | 0.064 | 0.043 | 0.936 | 0.957 | 4.122 | 3.935 | 4.60% |
| -40 | 0.066 | 0.044 | 0.934 | 0.956 | 4.121 | 3.892 | 5.60% |
| -20 | 0.000 | 0.000 | 1.000 | 1.000 | 10.499 | 10.499 | 0.00% |
| -20 | 0.002 | 0.003 | 0.998 | 0.997 | 10.507 | 10.505 | 0.00% |
| -20 | 0.082 | 0.058 | 0.918 | 0.942 | 10.519 | 10.227 | 2.80% |
| -20 | 0.084 | 0.058 | 0.916 | 0.942 | 10.516 | 10.176 | 3.20% |
| -20 | 0.090 | 0.060 | 0.910 | 0.940 | 10.507 | 9.990 | 4.90% |
| -20 | 0.092 | 0.061 | 0.908 | 0.939 | 10.503 | 9.918 | 5.60% |
| 0 | 0.000 | 0.000 | 1.000 | 1.000 | 22.892 | 22.892 | 0.00% |
| 0 | 0.002 | 0.003 | 0.998 | 0.997 | 22.909 | 22.905 | 0.00% |
| 0 | 0.100 | 0.073 | 0.900 | 0.927 | 22.916 | 22.406 | 2.20% |
| 0 | 0.104 | 0.074 | 0.896 | 0.926 | 22.901 | 22.274 | 2.70% |
| 0 | 0.106 | 0.075 | 0.894 | 0.925 | 22.894 | 22.200 | 3.00% |
| 0 | 0.116 | 0.078 | 0.884 | 0.922 | 22.854 | 21.752 | 4.80% |
| 0 | 0.118 | 0.079 | 0.882 | 0.921 | 22.846 | 21.647 | 5.20% |
| 20 | 0.000 | 0.000 | 1.000 | 1.000 | 44.224 | 44.224 | 0.00% |
| 20 | 0.002 | 0.003 | 0.998 | 0.997 | 44.251 | 44.246 | 0.00% |
| 20 | 0.100 | 0.080 | 0.900 | 0.920 | 44.314 | 43.916 | 0.90% |
| 20 | 0.128 | 0.092 | 0.872 | 0.908 | 44.102 | 42.799 | 3.00% |
| 20 | 0.130 | 0.093 | 0.870 | 0.907 | 44.085 | 42.687 | 3.20% |

(continued)

| TEMP C | MOLEF RAC Z-1336mz z | MOLEFR AC Z-1336mzz | MOLEF RAC i-Butane | MOLEFR AC i-Butane | Point Pressur e | Point Pressure | (BP-DP)/B P X 100% |
|---|---|---|---|---|---|---|---|
| | | | | | (psia) | (psia) | |
| 20 | 0.142 | 0.097 | 0.858 | 0.903 | 43.980 | 41.905 | 4.70% |
| 20 | 0.144 | 0.098 | 0.856 | 0.902 | 43.962 | 41.757 | 5.00% |
| 29.94 | 0.000 | 0.000 | 1.000 | 1.000 | 59.152 | 59.152 | 0.00% |
| 29.94 | 0.002 | 0.002 | 0.998 | 0.998 | 59.185 | 59.179 | 0.00% |
| 29.94 | 0.100 | 0.083 | 0.900 | 0.917 | 59.278 | 58.906 | 0.60% |
| 29.94 | 0.138 | 0.101 | 0.862 | 0.899 | 58.887 | 57.209 | 2.80% |
| 29.94 | 0.140 | 0.102 | 0.860 | 0.898 | 58.863 | 57.077 | 3.00% |
| 29.94 | 0.156 | 0.108 | 0.844 | 0.892 | 58.664 | 55.843 | 4.80% |
| 29.94 | 0.158 | 0.109 | 0.842 | 0.891 | 58.638 | 55.666 | 5.10% |
| 40 | 0.000 | 0.000 | 1.000 | 1.000 | 77.758 | 77.758 | 0.00% |
| 40 | 0.002 | 0.002 | 0.998 | 0.998 | 77.797 | 77.790 | 0.00% |
| 40 | 0.100 | 0.085 | 0.900 | 0.915 | 77.915 | 77.559 | 0.50% |
| 40 | 0.150 | 0.110 | 0.850 | 0.890 | 77.217 | 74.966 | 2.90% |
| 40 | 0.152 | 0.111 | 0.848 | 0.889 | 77.183 | 74.806 | 3.10% |
| 40 | 0.170 | 0.119 | 0.830 | 0.881 | 76.867 | 73.147 | 4.80% |
| 40 | 0.172 | 0.120 | 0.828 | 0.880 | 76.830 | 72.938 | 5.10% |
| 40 | 0.994 | 0.932 | 0.006 | 0.068 | 19.901 | 18.682 | 6.10% |
| 40 | 0.996 | 0.953 | 0.004 | 0.047 | 19.462 | 18.646 | 4.20% |
| 40 | 0.998 | 0.976 | 0.002 | 0.024 | 19.019 | 18.610 | 2.20% |
| 40 | 1.000 | 1.000 | 0.000 | 0.000 | 18.573 | 18.573 | 0.00% |
| 60 | 0.000 | 0.000 | 1.000 | 1.000 | 127.003 | 127.003 | 0.00% |
| 60 | 0.002 | 0.002 | 0.998 | 0.998 | 127.053 | 127.047 | 0.00% |
| 60 | 0.100 | 0.088 | 0.900 | 0.912 | 127.167 | 126.822 | 0.30% |
| 60 | 0.174 | 0.131 | 0.826 | 0.869 | 125.346 | 121.614 | 3.00% |
| 60 | 0.176 | 0.132 | 0.824 | 0.868 | 125.283 | 121.388 | 3.10% |
| 60 | 0.200 | 0.143 | 0.800 | 0.857 | 124.484 | 118.286 | 5.00% |
| 60 | 0.202 | 0.144 | 0.798 | 0.856 | 124.414 | 117.996 | 5.20% |
| 60 | 0.992 | 0.938 | 0.008 | 0.062 | 37.724 | 35.719 | 5.30% |
| 60 | 0.994 | 0.952 | 0.006 | 0.048 | 37.159 | 35.649 | 4.10% |
| 60 | 0.996 | 0.968 | 0.004 | 0.032 | 36.590 | 35.579 | 2.80% |
| 60 | 0.998 | 0.984 | 0.002 | 0.016 | 36.017 | 35.510 | 1.40% |
| 60 | 1.000 | 1.000 | 0.000 | 0.000 | 35.441 | 35.441 | 0.00% |
| 80 | 0.000 | 0.000 | 1.000 | 1.000 | 195.766 | 195.766 | 0.00% |
| 80 | 0.002 | 0.002 | 0.998 | 0.998 | 195.826 | 195.820 | 0.00% |
| 80 | 0.100 | 0.091 | 0.900 | 0.909 | 195.813 | 195.473 | 0.20% |
| 80 | 0.200 | 0.155 | 0.800 | 0.845 | 191.644 | 185.919 | 3.00% |
| 80 | 0.202 | 0.156 | 0.798 | 0.844 | 191.531 | 185.604 | 3.10% |

(continued)

| TEMP C | MOLEF RAC Z-1336mz z | MOLEFR AC Z-1336mzz | MOLEF RAC i-Butane | MOLEFR AC i-Butane | Point Pressur e | Point Pressure | (BP-DP)/B P X 100% |
|---|---|---|---|---|---|---|---|
| | | | | | (psia) | (psia) | |
| 80 | 0.232 | 0.173 | 0.768 | 0.827 | 189.727 | 180.281 | 5.00% |
| 80 | 0.234 | 0.174 | 0.766 | 0.826 | 189.600 | 179.888 | 5.10% |
| 80 | 0.988 | 0.936 | 0.012 | 0.064 | 66.356 | 62.946 | 5.10% |
| 80 | 0.990 | 0.946 | 0.010 | 0.054 | 65.673 | 62.823 | 4.30% |
| 80 | 0.992 | 0.956 | 0.008 | 0.044 | 64.988 | 62.700 | 3.50% |
| 80 | 0.994 | 0.967 | 0.006 | 0.033 | 64.299 | 62.578 | 2.70% |
| 80 | 0.996 | 0.977 | 0.004 | 0.023 | 63.607 | 62.456 | 1.80% |
| 80 | 0.998 | 0.989 | 0.002 | 0.011 | 62.912 | 62.335 | 0.90% |
| 80 | 1.000 | 1.000 | 0.000 | 0.000 | 62.214 | 62.214 | 0.00% |
| 100 | 0.000 | 0.000 | 1.000 | 1.000 | 288.344 | 288.344 | 0.00% |
| 100 | 0.002 | 0.002 | 0.998 | 0.998 | 288.414 | 288.410 | 0.00% |
| 100 | 0.100 | 0.094 | 0.900 | 0.906 | 288.342 | 288.072 | 0.10% |
| 100 | 0.200 | 0.168 | 0.800 | 0.832 | 282.331 | 277.543 | 1.70% |
| 100 | 0.234 | 0.190 | 0.766 | 0.810 | 279.190 | 270.878 | 3.00% |
| 100 | 0.236 | 0.191 | 0.764 | 0.809 | 278.990 | 270.435 | 3.10% |
| 100 | 0.272 | 0.213 | 0.728 | 0.787 | 275.118 | 261.515 | 4.90% |
| 100 | 0.274 | 0.215 | 0.726 | 0.785 | 274.888 | 260.971 | 5.10% |
| 100 | 0.980 | 0.925 | 0.020 | 0.075 | 110.102 | 104.222 | 5.30% |
| 100 | 0.982 | 0.932 | 0.018 | 0.068 | 109.325 | 104.018 | 4.90% |
| 100 | 0.988 | 0.954 | 0.012 | 0.046 | 106.978 | 103.410 | 3.30% |
| 100 | 0.990 | 0.961 | 0.010 | 0.039 | 106.191 | 103.209 | 2.80% |
| 100 | 0.998 | 0.992 | 0.002 | 0.008 | 103.016 | 102.413 | 0.60% |
| 100 | 1.000 | 1.000 | 0.000 | 0.000 | 102.215 | 102.215 | 0.00% |
| 120 | 0.000 | 0.000 | 1.000 | 1.000 | 409.858 | 409.858 | 0.00% |
| 120 | 0.002 | 0.002 | 0.998 | 0.998 | 409.977 | 409.971 | 0.00% |
| 120 | 0.100 | 0.099 | 0.900 | 0.901 | 407.061 | 406.942 | 0.00% |
| 120 | 0.200 | 0.183 | 0.800 | 0.817 | 391.493 | 387.711 | 1.00% |
| 120 | 0.296 | 0.253 | 0.704 | 0.747 | 374.979 | 363.762 | 3.00% |
| 120 | 0.298 | 0.255 | 0.702 | 0.745 | 374.620 | 363.212 | 3.00% |
| 120 | 0.360 | 0.298 | 0.640 | 0.702 | 363.197 | 345.268 | 4.90% |
| 120 | 0.362 | 0.299 | 0.638 | 0.701 | 362.818 | 344.660 | 5.00% |
| 120 | 0.364 | 0.301 | 0.636 | 0.699 | 362.439 | 344.051 | 5.10% |
| 120 | 0.966 | 0.912 | 0.034 | 0.088 | 173.805 | 164.630 | 5.30% |
| 120 | 0.968 | 0.916 | 0.032 | 0.084 | 172.967 | 164.311 | 5.00% |
| 120 | 0.970 | 0.921 | 0.030 | 0.079 | 172.128 | 163.992 | 4.70% |
| 120 | 0.980 | 0.946 | 0.020 | 0.054 | 167.908 | 162.417 | 3.30% |
| 120 | 0.982 | 0.951 | 0.018 | 0.049 | 167.060 | 162.106 | 3.00% |

(continued)

| TEMP C | MOLEF RAC Z-1336mz z | MOLEFR AC Z-1336mzz | MOLEF RAC i-Butane | MOLEFR AC i-Butane | Point Pressur e | Point Pressure | (BP-DP)/B P X 100% |
|---|---|---|---|---|---|---|---|
| | | | | | (psia) | (psia) | |
| 120 | 0.998 | 0.994 | 0.002 | 0.006 | 160.215 | 159.654 | 0.40% |
| 120 | 1.000 | 1.000 | 0.000 | 0.000 | 159.352 | 159.352 | 0.00% |

Near-azeotropes formed between Z-1336mzz and isobutane at 1 atm are shown in Table 2.5. For purposes of brevity, the listing of the combinations was edited to reflect increments of 0.10 Z-HFO-1336mzz liquid molar composition, or the boundaries of near-azeotropic behavior. The resulting abridged listing is presented in Table 2.5.

Table 2.5. Near-Azeotropes of the Z-HFO-1336mzz/Isobutane System at 1 atm

| TEMP C | LIQUID MOLEFR AC Z-1336mzz | VAPOR MOLEFR AC Z-1336mzz | LIQUID MOLEFR AC i-Butane | VAPOR MOLEF RAC i-Butane | Bubble Point Pressur e | Dew Point Pressur e | (BP-DP)/BP X 100% |
|---|---|---|---|---|---|---|---|
| | | | | | (psia) | (psia) | |
| -11.7998 | 0.000 | 0.000 | 1.000 | 1.000 | 14.696 | 14.696 | 0.00 % |
| -11.81961 | 0.002 | 0.003 | 0.998 | 0.997 | 14.696 | 14.693 | 0.00 % |
| -11.80082 | 0.100 | 0.067 | 0.900 | 0.933 | 14.696 | 14.003 | 4.70 % |
| -11.79252 | 0.102 | 0.068 | 0.898 | 0.932 | 14.696 | 13.925 | 5.20 % |

The data in Table 2.4 and 2.5 are broadly summarized in Tables 2.6 and 2.7 below. Azeotrope-like compositions (based on [(BP-VP)/BP] x 100 $\leq$ 3), are summarized in Table 2.6.

Table 2.6. Summary of Near-Azeotropes of the Z-HFO-1336mzz/Isobutane System

| Components | T (°C) | Z-HFO-1336mzz Vapor Mole Percentage Range (Remainder Isobutane) |
|---|---|---|
| Z-HFO-1336mzz / Isobutane | -40 | 0.3 - 4.2 |
| Z-HFO-1336mzz / Isobutane | -20 | 0.3 - 5.8 |
| Z-HFO-1336mzz / Isobutane | 0 | 0.3 -7.5 |
| Z-HFO-1336mzz / Isobutane | 20 | 0.3 - 9.2 |
| Z-HFO-1336mzz / Isobutane | 29.94 | 0.2 -10.2 |
| Z-HFO-1336mzz / Isobutane | 40 | 0.2 - 11.0 |
| Z-HFO-1336mzz / Isobutane | 60 | 0.2 - 13.1 |
| Z-HFO-1336mzz / Isobutane | 80 | 0.2 - 15.5 |
| Z-HFO-1336mzz / Isobutane | 100 | 0.2 - 19.0 |
| Z-HFO-1336mzz / Isobutane | 120 | 0.2 -25.5 |

EXAMPLE 3: Solubility of an HFO-1336mzz-Z/n-butane blend in softened polystyrene homopolymer.

This example demonstrates the enhanced solubility of Z-1,1,1,4,4,4-hexafluoro-2-butene *(i.e.,* HFO-1336mzz-Z)/n-butane blends in softened polystyrene compared to the solubility of neat HFO-1336mzz-Z in softened polystyrene.
The solubility of HFO-1336mzz-Z and an HFO-1336mzz-Z/n-butane blend containing 20 wt% n-butane in softened polystyrene was determined by the following procedure. Approximately 78 g polystyrene was loaded into a 125 cc stainless steel Parr© reactor. The reactor was weighed, mounted to inlet/outlet piping, immersed in an oil bath and evacuated. An HIP pressure generator (made by High Pressure Equipment Company) was used to load an amount of blowing agent in excess of its expected solubility into the evacuated reactor. The oil bath was heated and maintained at a temperature of 179°C for 30 minutes before the final pressure was recorded. The Parr© reactor was removed from the oil bath and cooled to room temperature. The reactor (with re-solidified polystyrene inside) was weighed after excess (non-dissolved in the polystyrene) blowing agent was drained or vented. The weight gain was recorded as solubility according to the following equation:

$$\text{solubility (phr)} = (\text{resin weight gain} \div 78) \times 100 \quad (\textbf{Equation 1})$$

where phr stands for parts (by mass) of blowing agent per hundred parts of polystyrene resin.

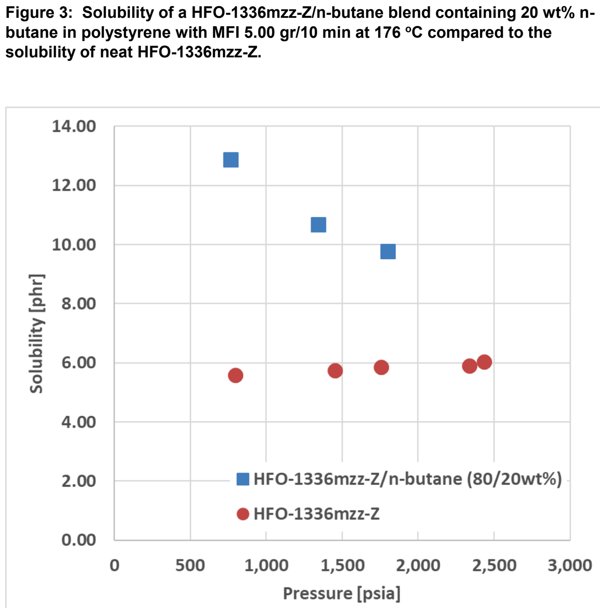

It has been found that, unexpectedly, a blend of HFO-1336mzz-Z with n-butane exhibits solubility in softened polystyrene that significantly exceeds the solubility of neat HFO-1336mzz-Z at the same conditions (Figure 3). For example, the solubility of neat HFO-1336mzz-Z in softened polystyrene homopolymer with a Melt Flow Index (MFI) of 5.0 g/10 min at 179 °C and 1,344 psia was estimated as 5.72 g of HFO-1336mzz-Z per 100 g of polystyrene (5.72 phr). In contrast, the solubility of an HFO-1336mzz-Z/n-butane blend containing 20 wt% n-butane exhibited a solubility in the same polystyrene, at the same temperature and pressure, of 10.68 g of HFO-1336mzz-Z per 100 g of polystyrene (10.68 phr), or 86.7% higher solubility than the solubility of neat HFO-1336mzz-Z.

EXAMPLE 4: Solubility of an HFO-1336mzz-Z/iso-butane blend in softened polystyrene

This example demonstrates the enhanced solubility of Z-1,1,1,4,4,4-hexafluoro-2-butene (*i.e.,* HFO-1336mzz-Z)/iso-butane blends in softened polystyrene compared to the solubility of neat HFO-1336mzz-Z in softened polystyrene and, remarkably, compared to the solubility of neat iso-butane in softened polystyrene. The solubility of HFO-1336mzz-Z, iso-butane and an HFO-1336mzz-Z/iso-butane blend containing 20 wt% iso-butane in softened polystyrene was determined by the procedure described in Example 3.

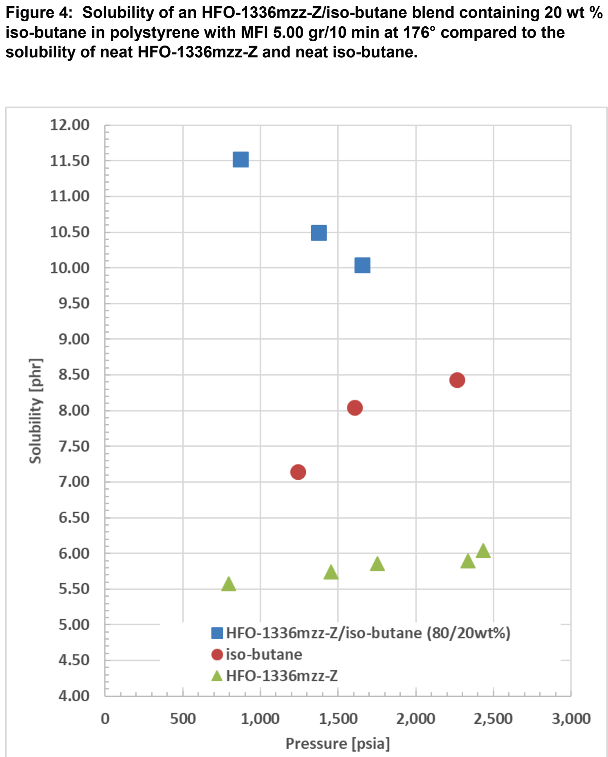

It has been found that, unexpectedly, blends of HFO-1336mzz-Z with iso-butane can exhibit solubility in softened polystyrene that significantly exceeds the solubility of neat HFO-1336mzz-Z at the same conditions (Figure 2). For example, the solubility of neat HFO-1336mzz-Z in softened polystyrene homopolymer with a Melt Flow Index (MFI) of 5.0 g/10 min at 179 °C and 1,376 psia was estimated as 5.73 g of HFO-1336mzz-Z per 100 g of polystyrene (5.73 phr). In contrast, the solubility of an HFO-1336mzz-Z/iso-butane blend containing 20 wt% iso-butane exhibited a solubility in the same polystyrene, at the same temperature and pressure, of 10.50 g of HFO-1336mzz-Z per 100 g of polystyrene (10.50 phr), or 83.2% higher solubility than the solubility of neat HFO-1336mzz-Z. Remarkably, the HFO-1336mzz-Z/iso-butane blend containing 20 wt% iso-butane exhibited a solubility in the same polystyrene and at the same temperature and pressure as above significantly higher than the solubility of both of its neat components, namely, HFO-1336mzz-Z and iso-butane. Results are illustrated in Figure 4.

EXAMPLE 5: Polystyrene foam extrusion using HFO-1336mzz/HFC-152a/iso-butane as the blowing agent.

This example demonstrates the feasibility of producing XPS foam that meets desirable specifications using a blowing agent blend containing HFO-1336mzz-Z, HFC-152a and iso-butane. The polystyrene was styrene homo-polymer (Total Petrochemicals, PS 535B) having a melt flow rate of 4 g/10 min. A nucleating agent (talc) was present with the polystyrene and blowing agent in the composition formed within the extruder.

A 50 mm twin screw laboratory extruder was used with 9 individually controlled, electrically heated zones. The first four zones of the extruder were used to heat and soften the polymer. The remaining barrel sections, from the blowing agent injection location to the end of the extruder, were set at selected lower temperatures. A rod die with a 2 mm opening was used for extruding foamed rod specimens. Results are summarized in Table 3.

Table 3. Extruder Operating Parameters and Foam Density Achieved

|  | Units | Run B |
|---|---|---|
| HFO-1336mzz-Z mass flow | phr* | 1.3 |
| Iso-butane mass flow | phr | 0.7 |
| HFC-152a mass flow | phr | 6.2 |
| HFO-1336mzz-Z in Blowing Agent | wt% | 15.8 |
| Iso-butane in Blowing Agent | wt% | 8.6 |
| HFC-152a in Blowing Agent | wt% | 75.6 |

(continued)

|  | Units | Run B |
|---|---|---|
| Extruder screw rotational speed | rpm | 40 |
| Polystyrene flow rate | kg/h | 20 |
| Nucleator (talc) proportion in the solids feed | wt% | 0.15 |
| Die Temperature | °C | 127 |
| Die Pressure | psi | 1,760 |
| Effective Foam Density | kg/m$^3$ | 40.1 |
| Closed Cells | % | 92.3 |
| *parts (by mass) per hundred parts of polystyrene resin | | |

The results in Table 3 show that use of a Z-HFO-1336mzz/HFC-152a/iso-butane blend containing 8.6 wt% iso-butane as the blowing agent enables the formation of extruded polystyrene foam with a density of 40.1 kg/m$^3$ and 92.3 % closed cells.

EXAMPLE 6: Preparation of polyurethane foams blown with blends of Z-1336mzz-Z and n-butane or iso-butane.

This example demonstrates the ability to create polyurethane foams with azeotropic blends of Z-1,1,1,4,4,4-hexafluoro-2-butene (*i.e.,* HFO-1336mzz-Z or Opteon™ 1100)/n-butane and Z-1,1,1,4,4,4-hexafluoro-2-butene/isobutane as the primary blowing agent.

The azeotropic compositions used were the azeotrope compositions at 1 atmosphere, as indicated in tables 1.3 and 2.3. Calculations for the blowing agent charges on a weight basis are provided in tables 4 and 5 below. The B-sides, without blowing agents added, were made in a 1000mL beaker in duplicate then placed in a 4°C refrigerator for at least one hour. Once cooled, the samples were brought to a fume hood; the blowing agents were added and mixed until fully incorporated. The isocyanate A-side (PAPI 27) was weighed in a 400mL beaker and then poured into the beaker containing the B-side. That beaker was then mixed for 3 seconds at 4000rpm by an Arrow Engineering Overhead Stirrer, and poured into a wax-coated cardboard box. The cardboard box containing the newly made foam was then placed in a well-ventilated area overnight to allow the foam ample time to fully cure. The following morning, the samples were cut into 6"x6"x1.5", 1"x1"x1", and 2"x2"x2" blocks with a bandsaw cutting machine. These foam blocks were tested for thermal conductivity utilizing a heat flow meter per ASTM C-518, compressive strength per ASTM D1621, and closed cell content. After testing, all the data values were compiled for analysis; the results are in table 8 below.

It was found that azeotropic blends of HFO-1336mzz-Z with either n-butane or isobutane proved very capable of making good, polyurethane foams. With very minimal formula optimization, the densities, compressive strengths, closed cell contents, and thermal conductivities of all the foams made using the above procedure proved more than acceptable.

| Table 4: Opteon™ 1100 and n-Butane Mixture | | |
|---|---|---|
|  | Opteon 1100 | n-Butane |
| **Azeotropic Mole Fraction** | 0.1204 | 0.8796 |
| **Molecular Weight** | 164.05 | 58.12 |
| **Azeotropic Weight Fraction** | 0.2787 | 0.7213 |
| **Weight in 500g Mixture** | 139.34 | 360.66 |

| Table 5: Opteon™ 1100 and Isobutane Mixture | | |
|---|---|---|
|  | Opteon 1100 | isobutane |
| **Azeotropic Mole Fraction** | 0.0388 | 0.9612 |
| **Molecular Weight** | 164.05 | 58.12 |
| **Azeotropic Weight Fraction** | 0.1023 | 0.8977 |
| **Weight in 500g Mixture** | 51.14 | 448.86 |

| Table 6: Opteon™ 1100 and n-Butane Formula | | | |
|---|---|---|---|
| MATERIAL | OH# | % | WEIGHT |
| Terol 1465 | 295 | 46.000% | 184.00 |
| Carpol MX 470 | 470 | 14.200% | 56.80 |
| Voranol 490 | 490 | 7.500% | 30.00 |
| TCPP | 1 | 10.000% | 40.00 |
| Dabco PM 301 | 300 | 3.00% | 12.00 |
| Dabco DC193 | 1 | 0.50% | 2.00 |
| Polycat 5 | 1 | 1.00% | 4.00 |
| Polycat 30 | 1 | 1.300% | 5.20 |
| Dabco 2039 | 1 | 0.200% | 0.80 |
| Polycat 41 | 1 | 0.400% | 1.60 |
| Dabco T120 | 1 | 0.10% | 0.40 |
| Water | 6233 | 1.800% | 7.2 |
| Opteon 1100 + n-Butane Azeotrope | 1 | 6.050% | 24.2 |

| Table 7: Opteon™ 1100 and Isobutane Formula | | | |
|---|---|---|---|
| MATERIAL | OH# | % | WEIGHT |
| Terol 1465 | 295 | 46.000% | 34.50 |
| Carpol MX 470 | 470 | 14.200% | 10.65 |
| Voranol 490 | 490 | 7.500% | 5.63 |
| TCPP | 1 | 10.000% | 7.50 |
| Dabco PM 301 | 300 | 3.00% | 2.25 |
| Dabco DC193 | 1 | 0.50% | 0.38 |
| Polycat 5 | 1 | 1.00% | 0.75 |
| Polycat 30 | 1 | 1.300% | 0.98 |
| Dabco 2039 | 1 | 0.200% | 0.15 |
| Polycat 41 | 1 | 0.400% | 0.30 |
| Dabco T120 | 1 | 0.10% | 0.08 |
| Water | 6233 | 1.800% | 1.35 |
| Opteon 1100 + Isobutane Azeotrope | 1 | 5.310% | 3.9825 |

| Table 8: Results | | |
|---|---|---|
| | Isobutane/1100 Foam | n-Butane/1100 Foam |
| Density (pcf) | 1.95 | 2.15 |
| Closed Cell Content (%) | 99.8 | 94.3 |
| Compression Max (PSI) | 25.4 | 30.6 |
| Compression Break (PSI) | 16.1 | 18.6 |
| k-factor (Btu in/ft^2 h °F) | 0.1631 | 0.1577 |

Those of skill in the art will understand that the invention is not limited to the scope of only those specific embodiments described herein, but rather extends to all equivalents, variations and extensions thereof. The invention is further defined by the following items:

Item 1. A composition comprising Z-HFO-1336mzz and a second component, wherein said second component is selected from the group consisting of:

a) n-butane;

b) isobutane,

wherein the second component is present in an effective amount to form an azeotrope or azeotrope-like mixture with the Z-HFO-1336mzz.

Item 2. The composition according to item 1, wherein the second component is n-butane.

Item 3. The composition according to item 1, wherein the second component is isobutane.

Item 4. The composition according to item 2, wherein the composition is an azeotropic composition comprising from 8.1 to 16.0 mole percent Z-HFO-1336mzz and from 84.0 to 91.9 mole percent n-butane.

Item 5. The composition of item 4, wherein the compositions exhibit a vapor pressure of from 2.5 psia to 329.4 psia over temperatures from -40 °C to 120 °C.

Item 6. The composition of item 2, wherein the composition is an azeotrope-like composition comprising from 0.2 to 31.3 mole percent Z-HFO-1336mzz and from 68.7 to 99.8 mole percent n-butane, at temperatures of from -40 °C to 120 °C.

Item 7. The composition of item 6, wherein the composition is an azeotrope-like composition comprising from 0.5 to 13.5 mole percent Z-HFO-1336mzz and from 86.5 to 99.5 mole percent n-butane, at temperatures of from -0.6 °C to -1.8 °C at a pressure of 1 atmosphere.

Item 8. The composition according to item 3, wherein the composition is an azeotropic composition comprising from 2.8 to 5.7 mole percent Z-HFO-1336mzz and from 94.3 to 97.2 mole percent i-butane.

Item 9. The composition of item 8, wherein the compositions exhibit a vapor pressure of from 4.1 psia to 346.3 psia over temperatures from -40 °C to 110 °C.

Item 10. The composition of item 3, wherein the composition is an azeotrope-like composition comprising from 0.2 to 18.3 mole percent Z-HFO-1336mzz and from 81.7 to 99.8 mole percent i-butane, at temperatures of from -40 °C to 120 °C.

Item 11. The composition according to item 1 further comprising an additive selected from the group consisting of lubricants, pour point modifiers, anti-foam agents, viscosity improvers, emulsifiers dispersants, oxidation inhibitors, extreme pressure agents, corrosion inhibitors, detergents, catalysts, surfactants, flame retardants, preservatives, colorants, antioxidants, reinforcing agents, fillers, antistatic agents, solubilizing agents, IR attenuating agents, nucleating agents, cell controlling agents, extrusion aids, stabilizing agents, thermally insulating agents, plasticizers, viscosity modifiers, impact modifiers, gas barrier resins, polymer modifiers, rheology modifiers, antibacterial agents, vapor pressure modifiers, UV absorbers, cross-linking agents, permeability modifiers, bitterants, propellants and acid catchers.

Item 12. A process of forming a foam comprising:

(a) adding a foamable composition comprising a polyol to a blowing agent; and,
(b) reacting said foamable composition with a polyisocyanate under conditions effective to form a foam, wherein said blowing agent comprises the composition according to item 1.

Item 13. A foam formed by the process according to item 12 wherein the foam is a polyurethane or polyisocyanurate.

Item 14. A foam comprising a thermoplastic polystyrene polymer, and a blowing agent, comprising the composition of item 1.

Item 15. A pre-mix composition comprising a foamable component and a blowing agent, said blowing agent comprising the composition according to item 1.

Item 16. A process for producing refrigeration comprising;

(a) condensing the composition according to item 1; and,
(b) evaporating said composition in the vicinity of a body to be cooled.

Item 17. A heat transfer system comprising a heat transfer medium, wherein said heat transfer medium comprises the composition according to item 1.

Item 18. A method of cleaning a surface comprising bringing the composition according to item 1 into contact with said surface.

Item 19. An aerosol product comprising a component to be dispensed and a propellant, wherein said propellant comprises the composition according to Item 1.

Item 20. A process for dissolving a solute comprising contacting and mixing said solute with a sufficient quantity of the composition according to item 1.

**Claims**

1. An azeotropic or near-azeotropic composition comprising Z-HFO-1336mzz and a second component, wherein said second component is selected from the group consisting of:

   a) n-butane;
   b) isobutane.

2. The composition according to claim 1, wherein the second component is n-butane or isobutane.

3. The composition according to any of the preceding claims, wherein the composition is an azeotropic composition comprising from 8.1 to 16.0 mole percent Z-HFO-1336mzz and from 84.0 to 91.9 mole percent n-butane, preferably wherein the composition exhibits a vapor pressure of from 2.5 psia to 329.4 psia (0.172 bar to 22.71 bar) over temperatures from 40 °C to 120 °C; or
   wherein the composition is an azeotrope-like composition comprising from 0.2 to 31.3 mole percent Z-HFO-1336mzz and from 68.7 to 99.8 mole percent n-butane, at temperatures of from -40 °C to 120 °C; preferably wherein the composition is an azeotrope-like composition comprising from 0.5 to 13.5 mole percent Z-HFO-1336mzz and from 86.5 to 99.5 mole percent n-butane, at temperatures of from -0.6 °C to -1.8 °C at a pressure of 1 atmosphere (1.013 bar).

4. The composition according to any of claims 1 or 2, wherein the composition is an azeotropic composition comprising from 2.8 to 5.7 mole percent Z-HFO-1336mzz and from 94.3 to 97.2 mole percent i-butane, preferably wherein the composition exhibits a vapor pressure of from 4.1 psia to 346.3 psia (0.283 bar to 23.88 bar) over temperatures from -40 °C to 110 °C; or
   wherein the composition is an azeotrope-like composition comprising from 0.2 to 18.3 mole percent Z-HFO-1336mzz and from 81.7 to 99.8 mole percent i-butane, at temperatures of from -40 °C to 120 °C.

5. The composition according to any of the preceding claims 1 to 4, further comprising an additive selected from the group consisting of lubricants, pour point modifiers, anti-foam agents, viscosity improvers, emulsifiers dispersants, oxidation inhibitors, extreme pressure agents, corrosion inhibitors, detergents, catalysts, surfactants, flame retardants, preservatives, colorants, antioxidants, reinforcing agents, fillers, antistatic agents, solubilizing agents, IR attenuating agents, nucleating agents, cell controlling agents, extrusion aids, stabilizing agents, thermally insulating agents, plasticizers, viscosity modifiers, impact modifiers, gas barrier resins, polymer modifiers, rheology modifiers, antibacterial agents, vapor pressure modifiers, UV absorbers, cross-linking agents, permeability modifiers, bitterants, propellants and acid catchers.

6. A use of the composition of any of the preceding claims as aerosol propellants, refrigerants, solvents, cleaning agents, blowing agents for thermoplastic and thermoset foams, heat transfer media, gaseous dielectrics, fire extinguishing and suppression agents, power cycle working fluids, polymerization media, particulate removal fluids, carrier fluids, buffing abrasive agents, or displacement drying agents.

7. The use according to claim 6, as heat transfer media in air conditioners, freezers, refrigerators, heat pumps, water chillers, flooded evaporator chillers, direct expansion chillers, heat pipes, immersion cooling units, walk-in coolers, heat pumps, mobile refrigerators, mobile air conditioning units and combinations thereof.

8. A process of forming a foam comprising:

   (a) adding a foamable composition to a blowing agent; and,
   (b) reacting said foamable composition under conditions effective to form a foam, wherein said blowing agent comprises the composition according to any of the claims 1 to 5.

9. A foam formed by the process according to Claim 8 wherein the foam is a polyurethane or polyisocyanurate, or a foam comprising a thermoplastic polystyrene polymer, and a blowing agent, comprising the composition of any of the claims 1 to 5.

10. A pre-mix composition comprising a foamable component and a blowing agent, said blowing agent comprising the composition according to any of the claims 1 to 5.

11. A process for producing refrigeration comprising;

   (a) condensing the composition according to any of the claims 1 to 5; and,
   (b) evaporating said composition in the vicinity of a body to be cooled.

12. A heat transfer system comprising a heat transfer medium, wherein said heat transfer medium comprises the composition according to any of the claims 1 to 5.

13. A method of cleaning a surface comprising bringing the composition according to any of the claims 1 to 5 into contact with said surface.

14. An aerosol product comprising a component to be dispensed and a propellant, wherein said propellant comprises the composition according to any of the claims 1 to 5.

15. A process for dissolving a solute comprising contacting and mixing said solute with a sufficient quantity of the composition according to any of the claims 1 to 5.

**Figure 1: Px Diagram for the System cis-1336mzz / n- Butane at 29.95 ºC**

**Figure 2: Px Diagram for the System cis-1336mzz / Isobutane at 29.94 °C**

**Figure 3:  Solubility of a HFO-1336mzz-Z/n-butane blend containing 20 wt% n-butane in polystyrene with MFI 5.00 gr/10 min at 176 °C compared to the solubility of neat HFO-1336mzz-Z.**

**Figure 4:** **Solubility of an HFO-1336mzz-Z/iso-butane blend containing 20 wt % iso-butane in polystyrene with MFI 5.00 gr/10 min at 176° compared to the solubility of neat HFO-1336mzz-Z and neat iso-butane.**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 62722149 A
- US 6703431 B, Dietzen
- US 6071580 A, Bland
- US 5977271 A, Malone
- US 6787580 B, Chonde
- US 5332761 A, Paquet

### Non-patent literature cited in the description

- Refrigeration Lubricants - Properties and Applications. **MICHELS, H. HARVEY** ; **SEINEL, TOBIAS H.** Fuels and Lubricants Handbook: Technology, Properties, Performance and Testing. ASTM International, June 2003
- **SAUNDERS** ; **FRISCH**. Polyurethanes Chemistry and Technology. John Wiley and Sons, vol. 1, 2
- **HAROLD R. NULL**. Phase Equilibrium in Process Design. Wiley-Interscience Publisher, 1970, 124-126
- **REID** ; **PRAUSNITZ** ; **POLING**. The Properties of Gases and Liquids. McGraw Hill, 241-387
- **STANLEY M. WALAS**. Phase Equilibria in Chemical Engineering. Butterworth Publishers, 1985, 165-244
- **C.-P. CHAI KAO** ; **M.E. PAULAITIS** ; **A. YOKOZEKI**. Double Azeotropy in Binary Mixtures of NH3 and CHF2CF. *Fluid Phase Equilibria*, 1997, vol. 127, 191-203